# EUROPEAN PATENT APPLICATION

(11) **EP 4 832 393 A1**
(43) Date of publication of application: **28.10.2026**
(21) Application number: 24905798.5
(22) Date of filing: 21.10.2024
(51) Int. Cl.: H04L 5/00

(54) **INFORMATION TRANSMISSION METHOD AND APPARATUS, TERMINAL, AND NETWORK DEVICE**

(30) Priority: 22.12.2023 CN 202311782177
(71) Applicant: Datang Mobile Communications Equipment Co., Ltd., Beijing 100085 (CN)
(72) Inventor: YUAN, Tianhao, Beijing 100085 (CN); SONG, Lei, Beijing 100085 (CN); GAO, Qiubin, Beijing 100085 (CN); HUANG, Qiuping, Beijing 100085 (CN)
(74) Representative: Studio Torta S.p.A.
(86) International application number: PCT/CN2024/125998
(87) International publication number: WO 2025/130310

(57) **Abstract**

The present disclosure provides an information transmission method and apparatus, a terminal, and a network device. The method is executed by a terminal, and comprises: determining a target second signal and one or more pieces of parameter information of the target second signal on the basis of an association relationship between target information and at least one second signal; and transmitting the target second signal to a network device on the basis of the one or more pieces of parameter information, wherein the target information comprises at least one of the following: at least one first signal and at least one piece of channel state information (CSI) reporting configuration information.

## Description

### CROSS-REFERENCE TO RELATED APPLICATION

This disclosure claims priority to Chinese Patent Application No. 202311782177.7, entitled "Information Transmission Method, Apparatus, Terminal, and Network Device", filed on December 22, 2023, the entire contents of which are incorporated herein by reference.

### TECHNICAL FIELD

The present disclosure relates to the field of communication technologies, and in particular, to an information transmission method and apparatus, a terminal, and a network device.

### BACKGROUND

For Coherent Joint Transmission (CJT), under the non-ideal reciprocity assumption, the uplink and downlink channels between a User Equipment (UE) and multiple cooperating points are no longer in a transposed relationship with each other. Correspondingly, the precoding codeword obtained by the network side through uplink channel estimation no longer matches the actual downlink channel. The UE may report the phase difference between the collaboration points to the network side, and the network side calculates a calibration coefficient based on the phase difference to pre-compensate the uplink channel, thereby determining a downlink precoding matrix for downlink transmission. The key for the network side to correctly estimate the calibration coefficient is to obtain accurate uplink and downlink channel information. However, the current protocol mechanism cannot ensure that the transmission occasion of a reference signal ((e.g., transmission of a Channel State Information Reference Signal (CSI-RS)) or the reporting of Channel State Information (CSI) (corresponding to downlink channel information estimation)) for downlink channel measurement is close enough to the transmission occasion of a reference signal (e.g., a Sounding Reference Signal (SRS)) for uplink channel measurement estimation, nor can it ensure that both correspond to the same transmission parameters, resulting in an inaccurate calibration coefficient calculated by the network side.

### SUMMARY

Embodiments of the present disclosure provide an information transmission method, an information transmission apparatus, a terminal and a network device, so as to ensure the accuracy of calibration coefficient calculated by the network side.

In order to address the above technical problem, an information transmission method performed by a terminal is provided in the embodiments of the present disclosure. The method includes:
determining a target second signal and one or more pieces of parameter information of the target second signal based on an association relationship between target information and at least one second signal; and
sending the target second signal to a network device based on the one or more pieces of parameter information;
wherein the target information includes at least one of the following: at least one first signal or at least one piece of channel state information (CSI) reporting configuration information.

In some embodiments, determining the one or more pieces of parameter information of the target second signal includes at least one of the following:
determining one or more time-domain positions of the target second signal; or
determining one or more transmission parameters of a first signal associated with the target second signal as one or more transmission parameters of the target second signal.

In some embodiments, the determining one or more time-domain positions of the target second signal includes:
determining the one or more time-domain positions of the target second signal according to a time start instant and a time slot offset of the target second signal:
wherein the time start instant includes at least one of the following:
a transmission occasion of a first signal associated with the target second signal;
a CSI reporting instance corresponding to a first signal associated with the target second signal;
a reporting instance corresponding to CSI reporting configuration information associated with the target second signal;
a transmission occasion of a first signal corresponding to CSI reporting configuration information associated with the target second signal; or
a receiving occasion of signaling that activates the association relationship.

In some embodiments, the determining one or more time-domain positions of the target second signal includes one of the following:
determining one or more first transmission occasions as one or more time-domain positions of the target second signal;
determining a second transmission occasion in the one or more first transmission occasions as one or more time-domain positions of the target second signal, wherein the second transmission occasion is an available time unit that is in the one or more first transmission occasions and that is at a minimum interval from a transmission occasion of the first signal or a CSI reporting instance; or
determining one or more third transmission occasions as one or more time-domain positions of the target second signal;
wherein the one or more first transmission occasions include at least one of the following: a next available time unit for a received signaling of triggering aperiodic CSI reporting or semi-persistent CSI reporting; a m-th available time unit before or after an obtained transmission occasion of a first signal associated with the target second signal, wherein m is an integer larger than or equal to 1; or an n-th available time unit before or after a CSI reporting instance corresponding to a first signal associated with the target second signal;
wherein the one or more third transmission occasions include at least one of the following: Y available time units before or after the transmission occasion of the first signal associated with the target second signal, wherein Y is an integer greater than or equal to 1; or X available time units before or after the CSI reporting instance corresponding to the first signal associated with the target second signal, wherein X is an integer greater than or equal to 1.

In some embodiments, the determining the one or more transmission parameters of the first signal associated with the target second signal as the one or more transmission parameters of the target second signal includes at least one of the following:
determining a TCI state of the first signal associated with the target second signal as the TCI state of the target second signal;
determining one or more QCL parameters of the first signal associated with the target second signal as one or more QCL parameters of the target second signal;
determining one or more ports of receiving the first signal associated with the target second signal as one or more ports of sending the target second signal;
determining a frequency of receiving the first signal associated with the target second signal as a frequency of sending the target second signal; or
determining a spatial filter for receiving the first signal associated with the target second signal as a spatial filter for transmitting the target second signal.

In some embodiments, the method further includes: obtaining the association relationship according to association relationship indication signaling; wherein the association relationship indication signaling includes at least one of the following:
radio resource control RRC signaling; a media access control control element MAC CE; or downlink control information DCI.

In some embodiments, the obtaining the association relationship according to the association relationship indication signaling includes one of the following:
obtaining an association relationship between the target information and the at least one second signal according to identification information of the second signal associated with the first signal carried in the association relationship indication signaling; obtaining an association relationship between the target information and the at least one second signal according to identification information of the second signal associated with the CSI reporting configuration information carried in the association relationship indication signaling; or obtaining an association relationship between the target information and the at least one second signal according to the target information and identification information of the second signal indicated in the association relationship indication signaling.

In some embodiments, the MAC CE is used for activating CSI reporting or activating transmission of the first signal.

In some embodiments, the association relationship indication signaling is used to implicitly or explicitly indicate whether the association relationship is valid.

In some embodiments, the association relationship indication signaling includes one or more slot offsets of the second signal.

In some embodiments, the method further includes: receiving indication information from a network device, wherein the indication information is used to indicate whether to activate the association relationship.

In some embodiments, the obtaining the association relationship between the target information and the at least one second signal according to the target information and the identification information of the second signal indicated in the association relationship indication signaling includes: if the indication information indicates to activate the association relationship, obtaining the association relationship between the target information and the at least one second signal according to the target information and the identification information of the second signal indicated in the association relationship indication signaling.

In some embodiments, determining the target second signal corresponding to one or more target parameters and the one or more pieces of parameter information of the target second signal based on the association relationship between the target information and the at least one second signal includes:
when the association relationship between the target information and the at least one second signal is valid, determining the target second signal corresponding to the one or more target parameters and the one or more pieces of parameter information of the target second signal based on the association relationship between the target information and the at least one second signal.

An information transmission method performed by a network device is further provided. The method includes: sending an association relationship between target information and at least one second signal to a terminal; wherein the target information includes at least one of the following: at least one first signal or at least one piece of channel state information (CSI) reporting configuration information.

In some embodiments, the method further includes: determining one or more time-domain positions of a target second signal; and receiving the target second signal at the one or more time-domain positions.

In some embodiments, the determining the one or more time-domain positions of the target second signal includes: determining the one or more time-domain positions of the target second signal according to a time start instant and a time slot offset of the target second signal:
wherein the time start instant includes at least one of the following:
a transmission occasion of a first signal associated with the target second signal; a CSI reporting instance corresponding to a first signal associated with the target second signal; a reporting instance corresponding to CSI reporting configuration information associated with the target second signal; a transmission occasion of a first signal corresponding to CSI reporting configuration information associated with the target second signal; or a receiving occasion of signaling that activates the association relationship.

In some embodiments, the determining the one or more time-domain positions of the target second signal includes one of the following: determining one or more first transmission occasions as one or more time-domain positions of the target second signal; determining a second transmission occasion in one or more first transmission occasions as one or more time-domain positions of the target second signal, wherein the second transmission occasion is an available time unit that is in the one or more first transmission occasions and that is at a minimum interval from a transmission occasion of the first signal or a CSI reporting instance; or determining one or more third transmission occasions as one or more time-domain positions of the target second signal;
wherein the one or more first transmission occasions include at least one of the following: a next available time unit for a DCI signaling of triggering aperiodic CSI reporting or semi-persistent CSI reporting; a m-th available time unit before or after a transmission occasion of a first signal associated with the target second signal, wherein m is an integer larger than or equal to 1; or an n-th available time unit before or after a CSI reporting instance corresponding to a first signal associated with the target second signal;
wherein the one or more third transmission occasions include at least one of the following: Y available time units before or after a transmission occasion of the first signal associated with the target second signal, wherein Y is an integer greater than or equal to 1; or, X available time units before or after the CSI reporting instance corresponding to the first signal associated with the target second signal, wherein X is an integer greater than or equal to 1.

In some embodiments, the sending the association relationship between the target information and the at least one second signal to the terminal includes: sending the association relationship between the target information and the at least one second signal to the terminal through association relationship indication signaling; wherein the association relationship indication signaling includes at least one of the following: radio resource control RRC signaling; a media access control control element MAC CE; downlink control information DCI.

In some embodiments, the association relationship indication signaling includes one of the following: identification information of a second signal associated with the first signal; identification information of a second signal associated with the CSI reporting configuration information; or identification information of the target information and the second signal.

In some embodiments, the MAC CE is used to activate the CSI reporting or activate transmission of the first signal.

In some embodiments, the association relationship indication signaling is used to explicitly or implicitly indicate whether the association relationship is valid.

In some embodiments, the association relationship indication signaling includes the slot offset of the second signal.

In some embodiments, the method further includes: sending indication information to a terminal, the indication information is used to indicate whether to activate the association relationship.

A terminal is further provided. The terminal includes a memory, a transceiver, and a processor; wherein the memory is configured to store a computer program; the transceiver is configured to send and receive data under the control of the processor; and the processor is configured to read the computer program in the memory and perform the following operations:
determining a target second signal and one or more pieces of parameter information of the target second signal based on an association relationship between target information and at least one second signal; sending, through the transceiver, the target second signal to a network device based on the one or more pieces of parameter information;
wherein the target information includes at least one of the following: at least one first signal or at least one piece of channel state information (CSI) reporting configuration information.

In some embodiments, the processor is configured to read a computer program in the memory and perform at least one of the following operations:
determining one or more time-domain positions of the target second signal; or
determining one or more transmission parameters of a first signal associated with the target second signal as one or more transmission parameters of the target second signal.

In some embodiments, the processor is configured to read the computer program in the memory and perform the following operations:
determining the one or more time-domain positions of the target second signal according to a time start instant and a time slot offset of the target second signal: wherein the time start instant includes at least one of the following:
a transmission occasion of a first signal associated with the target second signal; a CSI reporting instance corresponding to a first signal associated with the target second signal; a reporting instance corresponding to CSI reporting configuration information associated with the target second signal; a transmission occasion of a first signal corresponding to CSI reporting configuration information associated with the target second signal; or a receiving occasion of signaling that activates the association relationship.

In some embodiments, the processor is configured to read a computer program in the memory and perform one of the following operations:
determining one or more first transmission occasions as one or more time-domain positions of the target second signal;
determining a second transmission occasion in one or more first transmission occasions as one or more time-domain positions of the target second signal, wherein the second transmission occasion is an available time unit that is in the one or more first transmission occasions and that is at a minimum interval from a transmission occasion of the first signal or a CSI reporting instance; or
determining one or more third transmission occasions as one or more time-domain positions of the target second signal;
wherein the one or more first transmission occasions include at least one of the following: a next available time unit for a received signaling of triggering aperiodic CSI reporting or semi-persistent CSI reporting; a m-th available time unit before or after an obtained transmission occasion of a first signal associated with the target second signal, wherein m is an integer larger than or equal to 1; an n-th available time unit before or after a CSI reporting instance corresponding to a first signal associated with the target second signal;
wherein the one or more third transmission occasions include at least one of the following:
   Y available time units before or after the transmission occasion of the first signal associated with the target second signal, wherein Y is an integer greater than or equal to 1; X available time units before or after the CSI reporting instance corresponding to the first signal associated with the target second signal, wherein X is an integer greater than or equal to 1.

In some embodiments, the processor is configured to read a computer program in the memory and perform at least one of the following operations:
determining a TCI state of the first signal associated with the target second signal as the TCI state of the target second signal; determining one or more QCL parameters of the first signal associated with the target second signal as one or more QCL parameters of the target second signal; determining one or more ports of receiving the first signal associated with the target second signal as one or more ports for sending the target second signal; determining a frequency of receiving the first signal associated with the target second signal as a frequency of sending the target second signal; or determining a spatial filter for receiving the first signal associated with the target second signal as a spatial filter for transmitting the target second signal.

In some embodiments, the processor is configured to read the computer program in the memory to further perform the following operations:
obtaining the association relationship according to association relationship indication signaling; wherein the association relationship indication signaling includes at least one of the following: radio resource control RRC signaling; a media access control control element MAC CE; downlink control information DCI.

In some embodiments, the processor is configured to read a computer program in the memory and perform one of the following operations:
obtaining an association relationship between the target information and the at least one second signal according to identification information of the second signal associated with the first signal carried in the association relationship indication signaling; obtaining an association relationship between the target information and the at least one second signal according to identification information of the second signal associated with the CSI reporting configuration information carried in the association relationship indication signaling; or obtaining an association relationship between the target information and the at least one second signal according to the target information and identification information of the second signal indicated in the association relationship indication signaling.

In some embodiments, the MAC CE is used to activate the CSI reporting or activate transmission of the first signal.

In some embodiments, the association relationship indication signaling is used to explicitly or implicitly indicate whether the association relationship is valid.

In some embodiments, the association relationship indication signaling includes the slot offset of the second signal.

In some embodiments, the processor is used to read the computer program in the memory and further perform following operations:
receiving indication information sent by the network device, through the transceiver, wherein the indication information is used to indicate whether to activate the association relationship.

In some embodiments, the processor is used to read the computer program in the memory and further perform following operations:
if the indication information indicates to activate the association relationship, obtaining the association relationship between the target information and the at least one second signal according to the target information and the identification information of the second signal indicated in the association relationship indication signaling.

In some embodiments, the processor is used to read the computer program in the memory and further perform following operations:
when the association relationship between the target information and the at least one second signal is valid, determining the target second signal corresponding to the one or more target parameters and the one or more pieces of parameter information of the target second signal according to the association relationship between the target information and the at least one second signal.

A network device is provided. The network device includes a memory, a transceiver, and a processor, wherein the memory is configured to store a computer program; the transceiver is configured to send and receive data under the control of the processor; and the processor is configured to read the computer program in the memory and perform the following operations:
sending, through the transceiver, an association relationship between target information and at least one second signal to a terminal; wherein the target information includes at least one of the following: at least one first signal and at least one piece of channel state information (CSI) reporting configuration information.

In some embodiments, the processor is configured to read the computer program in the memory further performs the following operations: determining one or more time-domain positions of a target second signal; and receiving the target second signal at the one or more time-domain positions.

In some embodiments, the processor is configured to read the computer program in the memory and perform the following operations:
determining the one or more time-domain positions of the target second signal according to a time start instant and a time slot offset of the target second signal:
wherein the time start instant includes at least one of the following:
a transmission occasion of a first signal associated with the target second signal;
a CSI reporting instance corresponding to a first signal associated with the target second signal;
a reporting instance corresponding to CSI reporting configuration information associated with the target second signal;
a transmission occasion of a first signal corresponding to CSI reporting configuration information associated with the target second signal; or
a receiving occasion of signaling that activates the association relationship.

In some embodiments, the processor is configured to read a computer program in the memory and perform one of the following operations:
determining one or more first transmission occasions as one or more time-domain positions of the target second signal; determining a second transmission occasion in one or more first transmission occasions as one or more time-domain positions of the target second signal, wherein the second transmission occasion is an available time unit that is in the one or more first transmission occasions and that is at a minimum interval from a transmission occasion of the first signal or a CSI reporting instance; determining one or more third transmission occasions as one or more time-domain positions of the target second signal;
wherein the one or more first transmission occasions includes at least one of the following:
   a next available time unit for a DCI signaling of triggering aperiodic CSI reporting or semi-persistent CSI reporting; a m-th available time unit before or after a transmission occasion of a first signal associated with the target second signal, wherein m is an integer larger than or equal to 1; an n-th available time unit before or after a CSI reporting instance corresponding to a first signal associated with the target second signal;
   wherein the one or more third transmission occasions include at least one of the following: Y available time units before or after a transmission occasion of the first signal associated with the target second signal, wherein Y is an integer greater than or equal to 1; X available time units before or after the CSI reporting instance corresponding to the first signal associated with the target second signal, wherein X is an integer greater than or equal to 1.

In some embodiments, the processor is configured to read a computer program in the memory and perform one of the following operations:
sending the association relationship between the target information and the at least one second signal to the terminal through association relationship indication signaling; wherein the association relationship indication signaling includes at least one of the following: radio resource control RRC signaling; a media access control control element MAC CE; downlink control information DCI.

In some embodiments, the association relationship indication signaling includes one of the following: identification information of a second signal associated with the first signal; identification information of a second signal associated with the CSI reporting configuration information; or identification information of the target information and the second signal.

In some embodiments, the processor is configured to read a computer program in the memory and perform one of the following operations: sending indication information to a terminal through the transceiver, the indication information is used to indicate whether to activate the association relationship.

An information transmission apparatus applied to a terminal is provided. The apparatus includes: a first determining unit, configured to determine a target second signal and one or more pieces of parameter information of the target second signal based on an association relationship between target information and at least one second signal; a first sending unit, configured to send the target second signal to a network device based on the one or more pieces of parameter information; wherein the target information includes at least one of the following: at least one first signal or at least one channel state information (CSI) reporting configuration information.

An information transmission apparatus applied to a network device is provided. The apparatus includes: a second sending unit, configured to send an association relationship between target information and at least one second signal to the terminal; wherein the target information includes at least one of the following: at least one first signal or at least one piece of channel state information (CSI) reporting configuration information.

A processor-readable storage medium is provided, wherein the processor-readable storage medium stores a computer program, and the computer program is configured to cause a processor to execute the method provided above.

The beneficial effect of the present disclosure is as follows.

In the above technical solutions, the target second signal and the one or more pieces of parameter information of the target second signal are determined based on the association relationship between the at least one first signal and/or the at least one CSI reporting configuration information and the at least one second signal, so as to transmit the target second signal. This enables the terminal to transmit the target second signal in a timely manner, avoiding a situation where the transmission occasion of the target second signal and the transmission occasion of the first signal and/or the reporting time of CSI fail to meet the requirements for calibration coefficient estimation. The implementation of the present disclosure can ensure the accuracy of the calibration coefficient calculated by the network side.

### BRIEF DESCRIPTION OF THE DRAWINGS

To more clearly illustrate the technical solutions in the embodiments of the present disclosure or the related art, the following briefly describes the accompanying drawings required for describing the embodiments or the related art. Apparently, the accompanying drawings in the following description are merely some embodiments of the present disclosure, and those of ordinary skill in the art may still derive other drawings from these accompanying drawings without creative efforts.
FIG. 1 is a structural diagram of a network system applicable to some embodiments of the present disclosure;
FIG. 2 is a first schematic flowchart of an information transmission method according to some embodiments of the present disclosure;
FIG. 3 is a schematic diagram of a composition format of an Aperiodic CSI Trigger State Subselection MAC CE;
FIG. 4 is a schematic diagram of a composition format of an SP CSI reporting on PUCCH Activation/Deactivation MAC CE;
FIG. 5 is a second schematic flowchart of an information transmission method according to some embodiments of the present disclosure;
FIG. 6 is a first schematic structural diagram of an information transmission apparatus according to some embodiments of the present disclosure;
FIG. 7 is a structural diagram of a terminal according to some embodiments of the present disclosure;
FIG. 8 is a second schematic structural diagram of an information transmission apparatus according to some embodiments of the present disclosure;
FIG. 9 is a structural diagram of a network device according to some embodiments of the present disclosure.

### DETAILED DESCRIPTION

The technical solutions in the embodiments of the present disclosure will be clearly and completely described below with reference to the accompanying drawings in the embodiments of the present disclosure. Apparently, the described embodiments are some rather than all of the embodiments of the present disclosure. All other embodiments obtained by a person of ordinary skill in the art based on the embodiments of the present disclosure without creative efforts shall fall within the protection scope of the present disclosure.

The terms "first", "second", and the like in the specification and claims of the present disclosure are used to distinguish similar objects, and are not necessarily used to describe a specific order or sequence. It should be understood that the terms used in this way may be interchanged under appropriate circumstances, so that the embodiments of the present disclosure described herein can be implemented in an order other than those illustrated or described herein. In addition, the terms "include", "have" and any variations thereof are intended to cover non-exclusive inclusion, for example, a process, method, system, product, or device that includes a series of steps or units is not necessarily limited to those steps or units explicitly listed, but may include other steps or units that are not explicitly listed or inherent to these processes, methods, products, or devices.

In the embodiments of the present disclosure, the term "and/or" describes an association relationship between associated objects, indicating that three relationships may exist. For example, A and/or B may indicate that A exists alone, both A and B exist, and B exists alone. The symbol "/" generally indicates an "or" relationship between the associated objects. In the embodiments of the present disclosure, the term "a plurality of" means two or more, and the same applies to other quantifiers.

In the embodiments of the present disclosure, words such as "exemplary" or "for example" are used to represent examples, illustrations, or descriptions. Any embodiment or design solution described as "exemplary" or "for example" in the embodiments of the present disclosure shall not be construed as being preferred or advantageous over other embodiments or design solutions. Exactly, the use of words such as "exemplary" or "for example" is intended to present a related concept in a specific manner.

The related concepts mentioned in the present disclosure are briefly described below.

### 1. CJT Transmission

Rel-18 standardizes the CJT technology, which supports coherent transmission of up to 4 Transmission and Reception Points (TRPs). Assuming that the channels between the four TRPs and the UE are *Hᵢ* respectively, the signal y received by the UE can be expressed as:$y = \left[{H}_{1} {H}_{2} {H}_{3} {H}_{4}\right] Wx + n$ where W is a precoding codeword when the four TRPs perform joint transmission, *x* is a signal transmitted by each TRP, and n is receiver noise. It can be seen from the above formula that in CJT transmission, the precoding codeword of all TRPs can be written in the form of a joint matrix, that is, the precoding codeword is jointly determined according to the channel conditions of all TRPs.

### 2. CSI-RS Resource Configuration

The current system supports CSI-RS for CSI measurement and CSI-RS for beam measurement. In CSI measurement, the network side may configure a CSI-RS resource configuration for the UE, including one or more CSI-RS resource sets, and each CSI-RS resource set includes one or more CSI-RS resources.

### 3. CSI Reporting

The current system supports beam measurement reporting and CSI measurement reporting. In CSI reporting, the network side may configure a CSI reporting configuration for the UE, each CSI reporting configuration is associated with one or more CSI resource sets, each CSI resource set includes one or more CSI-RS resources, and the UE performs reporting according to the reporting quantity configured by the network side.

### 4. SRS Trigger

The current system supports SRS for CSI measurement, SRS for beam management, and the like. In uplink CSI measurement, the network side may configure one or more SRS resource sets for the UE, each SRS resource set includes one or more SRS resources, and the UE triggers SRS transmission according to signaling configured by the network side.

The CSI-RS resource configuration, CSI reporting and SRS supported by the current system have no established association relationship, and the SRS for uplink CSI measurement cannot be triggered through the CSI-RS resource configuration and CSI reporting.

Embodiments of the present disclosure are described below with reference to the accompanying drawings. The information transmission method and apparatus, the terminal, and the network device provided in the embodiments of the present disclosure may be applied to a wireless communication system. The wireless communication system may be a system adopting the 5th Generation (5G) mobile communication technology (hereinafter referred to as the 5G system for short), and those skilled in the art may understand that the 5G NR system is only an example and not a limitation.

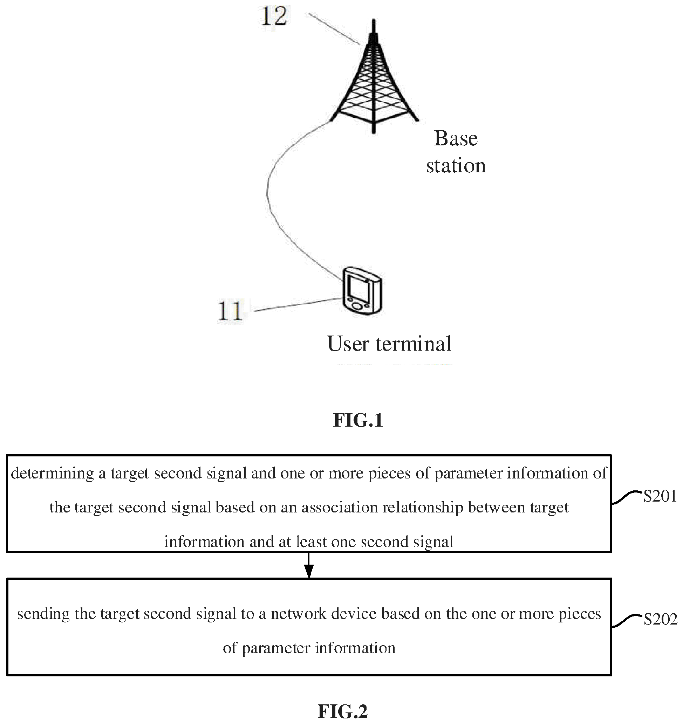

Referring to FIG. 1, FIG. 1 is a structural diagram of a network system applicable to the embodiments of the present disclosure. As shown in FIG. 1, the network system includes a user terminal 11 and a base station 12, wherein the user terminal 11 may be a User Equipment (UE), such as terminal-side devices including a mobile phone, a tablet personal computer, a laptop computer, a personal digital assistant (PDA), a mobile Internet device (MID), or a wearable device. It should be noted that the specific type of the user terminal 11 is not limited in the embodiments of the present disclosure. The base station 12 may be a base station of the 5G system and later versions (e.g., a gNB, a 5G NR NB), or a base station in another communication system (also referred to as a Node B). It should be noted that only a 5G base station is taken as an example in the embodiments of the present disclosure, but the specific type of the base station 12 is not limited.

Embodiments of the present disclosure provide an information transmission method and apparatus, a terminal, and a network device, to improve the accuracy of the calibration coefficient calculated by the network side.

The method and the apparatus are based on the same application concept, and since the principle of solving the problem by the method and the apparatus is similar, the implementation of the apparatus and the method may refer to each other, and details are not described herein again.

As shown in FIG. 2, an embodiment of the present disclosure provides an information transmission method performed by a terminal, including:
Step S201: determining a target second signal and one or more pieces of parameter information of the target second signal according to an association relationship between target information and at least one second signal;
wherein the target information includes at least one of the following: at least one first signal and at least one piece of CSI reporting configuration information.

It should be noted that the association relationship mentioned in the embodiments of the present disclosure may be understood as that the target information is associated with the second signal, that is, the target information can be used to determine the one or more pieces of parameter information of the second signal. In some embodiments, the one or more pieces of parameter information include the at least one time-domain position of the target second signal and one or more transmission parameters, and the one or more transmission parameters may be understood as the manner in which the terminal transmits the target second signal.

For the target second signal, it is necessary to obtain the first signal or CSI reporting configuration information associated with it based on the association relationship, and the first signal or CSI reporting configuration information generally corresponds to a specific transmission occasion and one or more transmission parameters, so that the one or more pieces of parameter information of the target second signal can be determined based on the associated first signal or CSI reporting configuration information.

Step S202: transmitting the target second signal to a network device according to the one or more pieces of parameter information.

It should be noted that the first signal in the embodiments of the present disclosure is a reference signal transmitted by the network device to the terminal for downlink channel measurement, for example, the first signal may be a Channel State Information Reference Signal (CSI-RS) (also referred to as a CSI-RS resource), a Tracking Reference Signal (TRS) (also referred to as a TRS resource), and the like; the second signal is a reference signal transmitted by the terminal to the network device for uplink channel measurement, for example, the second signal may be a Sounding Reference Signal (SRS) (also referred to as an SRS resource), and the like.

It should be noted that the CSI reporting configuration information refers to the relevant configuration for the terminal to report the measurement result of the first signal, and the CSI reporting configuration information may include the first signal whose measurement result needs to be reported, the resource used for reporting the result, and the like. It can be understood that the CSI reporting configuration information has an association relationship with the first signal, that is, the first signal associated with the CSI reporting configuration information can be determined through one CSI reporting configuration information.

It should be noted that in the embodiments of the present disclosure, the target second signal and the one or more pieces of parameter information of the target second signal are determined based on the association relationship between the at least one first signal and/or the at least one CSI reporting configuration information and the at least one second signal, so as to transmit the target second signal. This enables the terminal to transmit the target second signal in a timely manner, avoiding a situation where the transmission occasion of the target second signal and the transmission occasion of the first signal and/or the reporting time of CSI fail to meet the requirements for calibration coefficient estimation. The implementation of the present disclosure can ensure the accuracy of the calibration coefficient calculated by the network side.

In some embodiments, the association relationship is transmitted by the network device to the terminal, and in some embodiments, the method further includes: obtaining the association relationship according to association relationship indication signaling; wherein the association relationship indication signaling includes at least one of the following:
A11: Radio Resource Control (RRC) signaling;
A12: Media Access Control Control Element (MAC CE);
A13: Downlink Control Information (DCI).

In some embodiments, the step of obtaining the association relationship according to the association relationship indication signaling includes one of the following:
A21: obtaining an association relationship between the target information and the at least one second signal according to identification information of a second signal associated with the first signal and carried in the association relationship indication signaling;
   it should be noted that the identification information of the second signal may include an index of the second signal, a numbering value of the second signal, and the like. It should be noted that in this case, the association relationship indication signaling may be RRC signaling or a MAC CE. For example, when the association relationship indication signaling is RRC signaling, the RRC signaling may be RRC signaling used for CSI trigger state configuration and aperiodic first signal configuration, and the RRC signaling includes identification information of a second signal associated with the first signal. For example, when the association relationship indication signaling is a MAC CE, in some embodiments, the MAC CE is used to activate CSI reporting or activate first signal transmission, and the MAC CE includes identification information of a second signal associated with the first signal.
A22: obtaining an association relationship between the target information and the at least one second signal according to identification information of a second signal associated with the CSI reporting configuration information and carried in the association relationship indication signaling;
   it should be noted that in this case, the association relationship indication signaling may be RRC signaling or a MAC CE.
   For example, when the association relationship indication signaling is RRC signaling, the RRC signaling may be RRC signaling for CSI reporting configuration and aperiodic first signal configuration, and the RRC signaling includes identification information of a second signal associated with the CSI reporting configuration information.
   For example, when the association relationship indication signaling is a MAC CE, in some embodiments, the MAC CE is used to activate CSI reporting or activate first signal transmission, and the MAC CE includes identification information of a second signal associated with the CSI reporting configuration information.
A23. obtaining the association relationship between the target information and the at least one second signal according to the target information and the identification information of the second signal indicated in the association relationship indication signaling; it should be noted that in this case, the association relationship indication signaling may be DCI.
   For example, when the association relationship indication signaling is DCI, in some embodiments, the DCI is used to trigger aperiodic CSI reporting or semi-persistent CSI reporting, and includes the target information and the identification information of the second signal. The terminal may associate the target information with the identification information of the second signal to obtain the association relationship between the target information and the at least one second signal.

It should be noted that the network device indicates the association relationship through one of the foregoing A21-A23, which can improve the flexible configuration of the association relationship.

In some embodiments, the association relationship indication signaling is used to implicitly or explicitly indicate whether the association relationship is valid; in some embodiments, the step of determining the target second signal and the one or more pieces of parameter information of the target second signal based on the association relationship between the target information and the at least one second signal includes: when the association relationship between the target information and the at least one second signal is valid, determining the target second signal and the one or more pieces of parameter information of the target second signal based on the association relationship between the target information and the at least one second signal.

In this case, it can be understood that the network device may indicate the association relationship through the association relationship indication signaling, but whether to use (activate) the association relationship further requires the network device to notify the terminal. Only when the network device indicates that the association relationship is valid, can the terminal determine the target second signal and its one or more pieces of parameter information based on the association relationship, so as to send the target second signal according to network requirements and ensure the timeliness and reliability of the transmission of the target second signal.

It should be noted that for the explicit indication manner, it can be understood that there is a separate indication field in the association relationship indication signaling to indicate whether the association relationship is valid. For the implicit indication manner, it can be understood that the association relationship indication signaling does not separately configure an indication field for indicating the validity of the association relationship, and the validity can be indicated by the existence of the association relationship-i.e., by whether the association relationship indication signaling includes the identification information of the second signal. The identification information of the second signal may be indicated by a newly added indication field or a reused existing indication field in the association relationship indication signaling.

It should be noted that when the association relationship indication signaling is RRC signaling, MAC CE, or DCI, the validity of the association relationship may be indicated in an implicit or explicit manner. In some embodiments, the validity of the association relationship may not be directly indicated by the association relationship indication signaling, but by additional indication information sent by the network device. In some embodiments, the method further includes: receiving indication information sent by the network device, wherein the indication information is used to indicate whether to activate the association relationship.

In some embodiments, for the scenario of A23, when the association relationship indication signaling indicates the target information and the identification information of the second signal, the terminal obtains the association relationship between the target information and the at least one second signal based on the target information and the identification information of the second signal only when it is determined that the association relationship needs to be activated; in some embodiments, when the activation of the association relationship is indicated by additional indication information, the terminal associates the target information with the identification information of the second signal based on the association relationship indication signaling to obtain the association relationship between the target information and the at least one second signal, only when the indication information indicates to activate the association relationship.

It should be noted that to ensure the smooth transmission of the target second signal, in some embodiments, determining the one or more pieces of parameter information of the target second signal includes at least one of the following:
B11. determining the one or more time-domain positions of the target second signal;
it should be noted that after determining the time-domain positions, the terminal knows the time-domain positions used to send the target second signal.
In some embodiments, in a first implementation manner, the specific implementation of determining the one or more time-domain positions of the target second signal includes: determining the one or more time-domain positions of the target second signal according to the time start instant and the slot offset of the target second signal; in some embodiments, the slot offset is notified by the aforementioned association relationship indication signaling, i.e., the association relationship indication signaling includes the slot offset of the second signal.
In some embodiments, the time start instant includes at least one of the following:
B111. the transmission occasion of the first signal associated with the target second signal;
B112. the CSI reporting instance corresponding to the first signal associated with the target second signal;
   it should be noted that the aforementioned B111 and B112 are mainly applicable to the association relationship between at least one first signal and at least one second signal.
B113. the reporting instance corresponding to the CSI report configuration information associated with the target second signal;
B114. the transmission occasion of the first signal corresponding to the CSI report configuration information associated with the target second signal;
   it should be noted that the aforementioned B113 and B114 are mainly applicable to the association relationship between at least one piece of CSI report configuration information and at least one second signal.
B115. the receiving occasion of the signaling for activating the association relationship;
   it should be noted that the aforementioned B115 is applicable to both the association relationship between at least one piece of CSI report configuration information and at least one second signal, and the association relationship between at least one first signal and at least one second signal.

It should be noted that the signaling for activating the association relationship may be the aforementioned RRC signaling, MAC CE, DCI, or the signaling carrying the aforementioned indication information.

In some embodiments, when the time start instants include B111, the one or more time-domain positions of the target second signal determined by the terminal are the one or more time-domain positions calculated by adding the slot offset to the transmission occasion of the first signal associated with the target second signal. In some embodiments, when the time start instants include B112, the one or more time-domain positions of the target second signal determined by the terminal are the one or more time-domain positions calculated by adding the slot offset to the CSI reporting instance corresponding to the first signal associated with the target second signal. In some embodiments, when the time start instants include B113, the one or more time-domain positions of the target second signal determined by the terminal are the one or more time-domain positions calculated by adding the slot offset to the reporting instance corresponding to the CSI report configuration information associated with the target second signal. In some embodiments, when the time start instants include B114, the one or more time-domain positions of the target second signal determined by the terminal are the one or more time-domain positions calculated by adding the slot offset to the transmission occasion of the first signal corresponding to the CSI report configuration information associated with the target second signal. In some embodiments, when the time start instants include B115, the one or more time-domain positions of the target second signal determined by the terminal are the one or more time-domain positions calculated by adding the slot offset to the receiving occasion of the signaling for activating the association relationship. In some embodiments, when the time start instants include B111 and B112, the one or more time-domain positions of the target second signal determined by the terminal include: the one or more time-domain positions calculated by adding the slot offset to the transmission occasion of the first signal associated with the target second signal, and the one or more time-domain positions calculated by adding the slot offset to the CSI reporting instance corresponding to the first signal associated with the target second signal. In some embodiments, when the time start instants include B111 and B113, the one or more time-domain positions of the target second signal determined by the terminal include: the one or more time-domain positions calculated by adding the slot offset to the transmission occasion of the first signal associated with the target second signal, and the one or more time-domain positions calculated by adding the slot offset to the reporting instance corresponding to the CSI report configuration information associated with the target second signal.

In some embodiments, when the time start instants include B111 and B114, the one or more time-domain positions of the target second signal determined by the terminal include: the one or more time-domain positions calculated by adding the slot offset to the transmission occasion of the first signal associated with the target second signal, and the one or more time-domain positions calculated by adding the slot offset to the transmission occasion of the first signal corresponding to the CSI report configuration information associated with the target second signal.

In some embodiments, when the time start instants include B111 and B115, the one or more time-domain positions of the target second signal determined by the terminal include: the one or more time-domain positions calculated by adding the slot offset to the transmission occasion of the first signal associated with the target second signal, and the one or more time-domain positions calculated by adding the slot offset to the receiving occasion of the signaling for activating the association relationship.

In some embodiments, when the time start instants include B111, B112, and B113, the one or more time-domain positions of the target second signal determined by the terminal include: the one or more time-domain positions calculated by adding the slot offset to the transmission occasion of the first signal associated with the target second signal, the one or more time-domain positions calculated by adding the slot offset to the CSI reporting instance corresponding to the first signal associated with the target second signal, and the one or more time-domain positions calculated by adding the slot offset to the reporting instance corresponding to the CSI report configuration information associated with the target second signal.

In some embodiments, when the time start instants include B111, B112, and B114, the one or more time-domain positions of the target second signal determined by the terminal include: the one or more time-domain positions calculated by adding the slot offset to the transmission occasion of the first signal associated with the target second signal, the one or more time-domain positions calculated by adding the slot offset to the CSI reporting instance corresponding to the first signal associated with the target second signal, and the one or more time-domain positions calculated by adding the slot offset to the transmission occasion of the first signal corresponding to the CSI report configuration information associated with the target second signal.

In some embodiments, when the time start instants include B111, B112, and B115, the one or more time-domain positions of the target second signal determined by the terminal include: the one or more time-domain positions calculated by adding the slot offset to the transmission occasion of the first signal associated with the target second signal, the one or more time-domain positions calculated by adding the slot offset to the CSI reporting instance corresponding to the first signal associated with the target second signal, and the one or more time-domain positions calculated by adding the slot offset to the receiving occasion of the signaling for activating the association relationship.

In some embodiments, when the time start instants include B112, B113, and B114, the one or more time-domain positions of the target second signal determined by the terminal include: the one or more time-domain positions calculated by adding the slot offset to the CSI reporting instance corresponding to the first signal associated with the target second signal, the one or more time-domain positions calculated by adding the slot offset to the reporting instance corresponding to the CSI report configuration information associated with the target second signal, and the one or more time-domain positions calculated by adding the slot offset to the transmission occasion of the first signal corresponding to the CSI report configuration information associated with the target second signal.

In some embodiments, when the time start instants include B112, B113, and B115, the one or more time-domain positions of the target second signal determined by the terminal include: the one or more time-domain positions calculated by adding the slot offset to the CSI reporting instance corresponding to the first signal associated with the target second signal, the one or more time-domain positions calculated by adding the slot offset to the reporting instance corresponding to the CSI report configuration information associated with the target second signal, and the one or more time-domain positions calculated by adding the slot offset to the receiving occasion of the signaling for activating the association relationship.

In some embodiments, when the time start instants include B113, B114, and B115, the one or more time-domain positions of the target second signal determined by the terminal include: the one or more time-domain positions calculated by adding the slot offset to the reporting instance corresponding to the CSI report configuration information associated with the target second signal, the one or more time-domain positions calculated by adding the slot offset to the transmission occasion of the first signal corresponding to the CSI report configuration information associated with the target second signal, and the one or more time-domain positions calculated by adding the slot offset to the receiving occasion of the signaling for activating the association relationship.

It should be noted that the foregoing describes the method for obtaining the one or more time-domain positions of the target second signal when the network device provides the slot offset. When the network device does not provide the slot offset, in some embodiments, in a second implementation manner, the specific implementation of determining the one or more time-domain positions of the target second signal includes one of the following:
B21. determining the first transmission occasion as the one or more time-domain positions of the target second signal;
in some embodiments, one or more first transmission occasions include at least one of the following:
B211. the next available time unit of the received signaling that triggers aperiodic CSI reporting or semi-persistent CSI reporting; it should be noted that the time unit mentioned herein and subsequently may be a slot or a symbol.
B212. the m-th available time unit before or after the transmission occasion of the first signal associated with the target second signal, wherein m is an integer greater than or equal to 1; it should be noted that the first signal associated with the target second signal herein may be the first signal directly indicated in the association relationship, or the first signal corresponding to the CSI report configuration information indicated in the association relationship.
   In some embodiments, m is a value from protocol convention (or predefined) or indicated by the network device.
B213. the n-th available time unit before or after the CSI reporting instance corresponding to the first signal associated with the target second signal, wherein n is an integer greater than or equal to 1; it should be noted that the first signal associated with the target second signal herein may be the first signal directly indicated in the association relationship, or the first signal corresponding to the CSI report configuration information indicated in the association relationship.
   In some embodiments, n is a value from protocol convention (or predefined) or indicated by the network device. It should be noted that each of the foregoing determinations has only one transmission occasion.

B22. determining the second transmission occasion among the first transmission occasions as the one or more time-domain positions of the target second signal, wherein the second transmission occasion is the available time unit in the first transmission occasions, which has the minimum interval from the transmission occasion of the first signal or CSI reporting instance; in some embodiments, when one or more first transmission occasions include B211 and B212, the second transmission occasion is the available time unit with the minimum interval from the transmission occasion or CSI reporting instance of the first signal, among the next available time unit of the received signaling that triggers aperiodic CSI or semi-persistent CSI reporting and the m-th available time unit before or after the obtained transmission occasion of the first signal associated with the target second signal; in some embodiments, when one or more first transmission occasions include B211 and B213, the second transmission occasion is the available time unit with the minimum interval from the transmission occasion or CSI reporting instance of the first signal, among the next available time unit of the received signaling that triggers aperiodic CSI or semi-persistent CSI reporting and the n-th available time unit before or after the CSI reporting instance corresponding to the first signal associated with the target second signal; in some embodiments, when one or more first transmission occasions include B212 and B213, the second transmission occasion is the available time unit with the minimum interval from the transmission occasion or CSI reporting instance of the first signal, among the m-th available time unit before or after the transmission occasion of the first signal associated with the target second signal, and the n-th available time unit before or after the CSI reporting instance corresponding to the first signal associated with the target second signal. In some embodiments, when one or more first transmission occasions include B211, B212, and B213, the second transmission occasion is the available time unit with the minimum interval from the transmission occasion or CSI reporting instance of the first signal, among the next available time unit of the received signaling that triggers aperiodic CSI or semi-persistent CSI reporting, the m-th available time unit before or after the transmission occasion of the first signal associated with the target second signal, and the n-th available time unit before or after the CSI reporting instance corresponding to the first signal associated with the target second signal.

B23. determining the one or more third transmission occasions as the one or more time-domain positions of the target second signal; in some embodiments, the one or more third transmission occasions includes at least one of the following:
B231. Y available time units before or after the transmission occasion of the first signal associated with the target second signal, wherein Y is an integer greater than or equal to 1; it should be noted that the first signal associated with the target second signal herein may be the first signal directly indicated in the association relationship, or the first signal corresponding to the CSI report configuration information indicated in the association relationship.
   In some embodiments, Y is a value from protocol convention (or predefined) or indicated by the network device.
B232. X available time units before or after the CSI reporting instance corresponding to the first signal associated with the target second signal, wherein X is an integer greater than or equal to 1; it should be noted that the first signal associated with the target second signal herein may be the first signal directly indicated in the association relationship, or the first signal corresponding to the CSI report configuration information indicated in the association relationship.
   In some embodiments, X is a value from a protocol convention (or predefined) or indicated by the network device.

It should be noted that in this case, each of the aforementioned B231 and B232 may determine multiple transmission occasions. In actual use, the terminal attempts to send the target second signal on each transmission occasion in the order of the transmission occasions. Once the target second signal is successfully sent on a certain transmission occasion, the terminal no longer sends the target second signal on subsequent transmission occasions.

In some embodiments, when the one or more third transmission occasions includes B231, the Y available time units before or after the transmission occasion of the first signal associated with the target second signal are determined as the one or more time-domain positions of the target second signal; when the one or more third transmission occasions includes B232, the X available time units before or after the CSI reporting instance corresponding to the first signal associated with the target second signal are determined as the one or more time-domain positions of the target second signal; when the one or more third transmission occasions includes B231 and B232, the Y available time units before or after the transmission occasion of the first signal associated with the target second signal and the X available time units before or after the CSI reporting instance corresponding to the first signal associated with the target second signal are determined as the one or more time-domain positions of the target second signal.

B12. determining the one or more transmission parameters of the first signal associated with the target second signal as the one or more transmission parameters of the target second signal.

It should be noted that the first signal associated with the target second signal herein may be the first signal directly indicated in the association relationship, or the first signal corresponding to the CSI report configuration information indicated in the association relationship.

In some embodiments, in an implementation manner, the step of determining the one or more transmission parameters of the first signal associated with the target second signal as the one or more transmission parameters of the target second signal includes at least one of the following:
B121. determining the TCI state of the first signal associated with the target second signal as the TCI state of the target second signal; it should be noted that by setting the TCI state of the target second signal to be the same as that of the associated first signal, the target second signal can be Quasi-Co-Located (QCL) with the associated first signal.
B122. determining one or more QCL parameters of the first signal associated with the target second signal as one or more QCL parameters of the target second signal; it should be noted that by setting the one or more QCL parameters of the target second signal to be the same as those of the associated first signal, the target second signal can be QCL with the associated first signal.
B123. determining the reception port of the first signal associated with the target second signal as the transmission port of the target second signal; in this case, it can be understood that the reception port of the first signal associated with the target second signal is used as the transmission port of the target second signal.
B124. determining the reception frequency of the first signal associated with the target second signal as the transmission frequency of the target second signal; in this case, it can be understood that the reception frequency of the first signal associated with the target second signal is used as the transmission frequency of the target second signal.
B125. determining the spatial filter of receiving the first signal associated with the target second signal as the spatial filter of transmitting the target second signal; in this case, it can be understood that the spatial filter of receiving the first signal associated with the target second signal is used as the spatial filter of transmitting the target second signal.

It should be noted that from the foregoing description, the one or more transmission parameters determined in the embodiments of the present disclosure need to include at least one of TCI state, QCL parameters, port, frequency, and spatial filter; the terminal may determine which one or more transmission parameters to use based on the corresponding manners in B121-B125.

It should be noted that by transmitting the target second signal based on at least one of B121-B125, the target second signal and the first signal can be QCL, so that the transmission occasion of the target second signal meets the processing requirements of the network side, and it is ensured that the two correspond to the same transceiver antenna ports or antenna ports.

The following describes specific applications of the embodiments of the present disclosure by taking an example where the first signal corresponds to a CSI-RS resource, the second signal corresponds to an SRS resource, and the base station communicates with the terminal.

Application Case 1: the terminal receives signaling, from the base station, that configures the association relationship between the CSI-RS resource and the SRS resource, wherein the signaling also indicates the slot offset of the SRS resource, and the terminal determines the target SRS and the corresponding one or more pieces of parameter information.

In this case, the target information corresponds to at least one CSI-RS resource, and the association relationship between the target information and the at least one second signal refers to the association relationship between the at least one CSI-RS resource and the at least one SRS resource (hereinafter simply referred to as the association relationship between the CSI-RS resource and the SRS resource); the slot offset of the second signal corresponds to the slot offset of the SRS resource.

It should be noted that CSI-RS resources are divided into periodic CSI-RS resources, semi-persistent CSI-RS resources, and aperiodic CSI-RS resources; SRS resources are divided into periodic SRS resources, semi-persistent SRS resources, and aperiodic SRS resources. In this application case, when the base station indicates the association relationship between the CSI-RS resource and the SRS resource through signaling, the CSI-RS resource is at least one of the following: periodic CSI-RS resource, semi-persistent CSI-RS resource, and aperiodic CSI-RS resource; the SRS resource is at least one of the following: periodic SRS resource, semi-persistent SRS resource, and aperiodic SRS resource.

The terminal obtains the association relationship between the CSI-RS resource and the SRS resource indicated by the base station, in at least one of the following manners:

### Manner 1

The terminal receives the RRC signaling sent by the base station for CSI trigger state configuration and aperiodic CSI-RS resource configuration, and determines the association relationship between the CSI-RS resource and the SRS resource. The association relationship may also be represented as the association relationship between the CSI-RS resource set and the SRS resource set, wherein the CSI-RS resource set includes one or more CSI-RS resources, and the SRS resource set includes one or more SRS resources. When configuring the aperiodic CSI-RS, the RRC signaling may further indicate the SRS resource associated with each aperiodic CSI-RS resource.

For example, the associated SRS resource set identifier (associatedSRS-ResourceSetId) and slot offset (slotOffset) are added to CSI-AperiodicTriggerStateList or CSI-ResourceConfig to indicate the associated SRS resource set ID and the slot offset of the SRS resource. The slot offset may also be named differently from slotOffset (the parameter name in SRSConfig signaling), such as slotOffset-r19.

For example, a manner of adding the association relationship in CSI-AperiodicTriggerStateList is as follows:

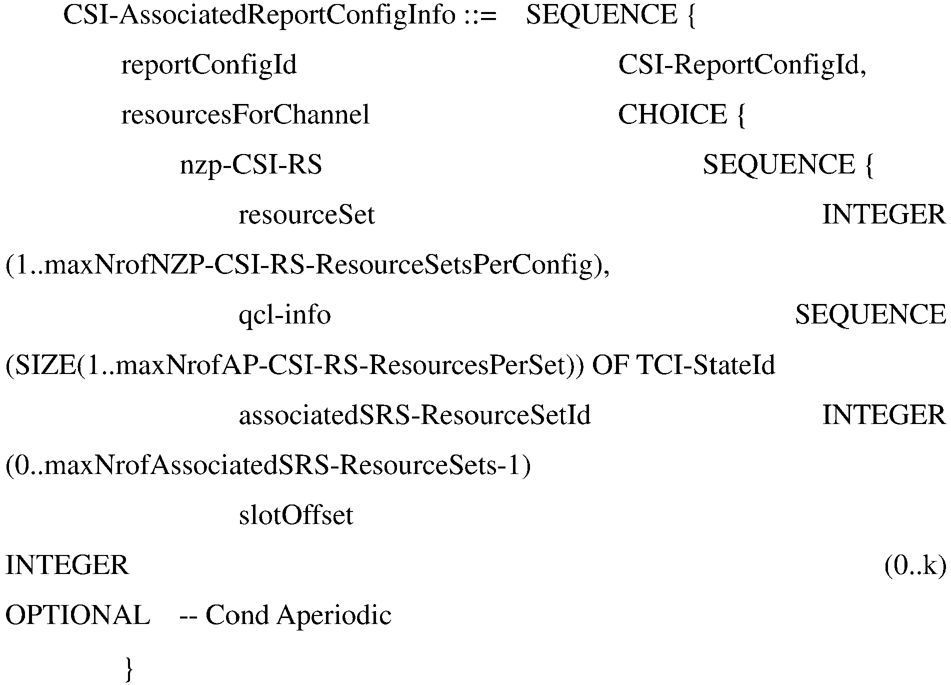

The range of associatedSRS-ResourceSetId includes all SRS resource set IDs allocated to the terminal, and the range of slotOffset is 0 to k (k is a positive integer that meets the base station's channel calculation requirements), wherein k is the upper limit for satisfying the base station's channel computation needs.

The base station may indicate whether the association relationship is valid in an explicit or implicit manner. For example, the terminal determines that the association relationship is valid only when CSI-AperiodicTriggerStateList or CSI-ResourceConfig includes associatedSRS-ResourceSetId and slotOffset. Alternatively, the terminal may determine whether the association relationship is valid (or whether to activate the association relationship) through a parameter configured by the base station in RRC signaling, MAC CE, or DCI. For example, a new 1-bit parameter or a reused unused 1-bit parameter is used: when the parameter value is 1, the terminal determines that the association relationship is valid; when the parameter value is 0, the terminal determines that the association relationship is invalid.

### Manner 2

The base station configures not only the SRS resource set and the slot offset of the SRS resource associated with the aperiodic CSI-RS resource configuration in the RRC signaling, but also the SRS resource set and the slot offset of the SRS resource associated with the semi-persistent CSI-RS resource and periodic CSI-RS resource configuration. The terminal receives the RRC signaling and determines the association relationship between the CSI-RS resource and the SRS resource based on the signaling content (i.e., the identification information of the SRS resource associated with the CSI-RS resource carried in the RRC signaling).

For example, the associated SRS resource set (associatedSRS-ResourceSetId) and slot offset (slotOffset) are added to CSI-ResourceConfig to indicate the associated SRS resource set ID and the slot offset of the SRS resource.

For example, a manner of adding the association relationship in CSI-ResourceConfig is as follows:

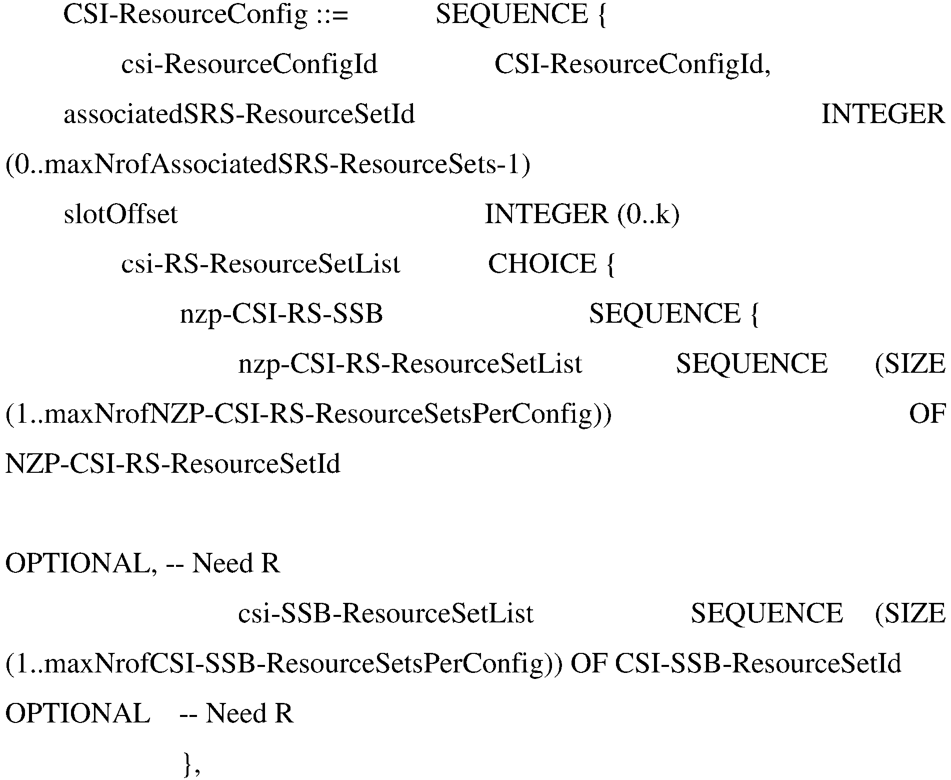

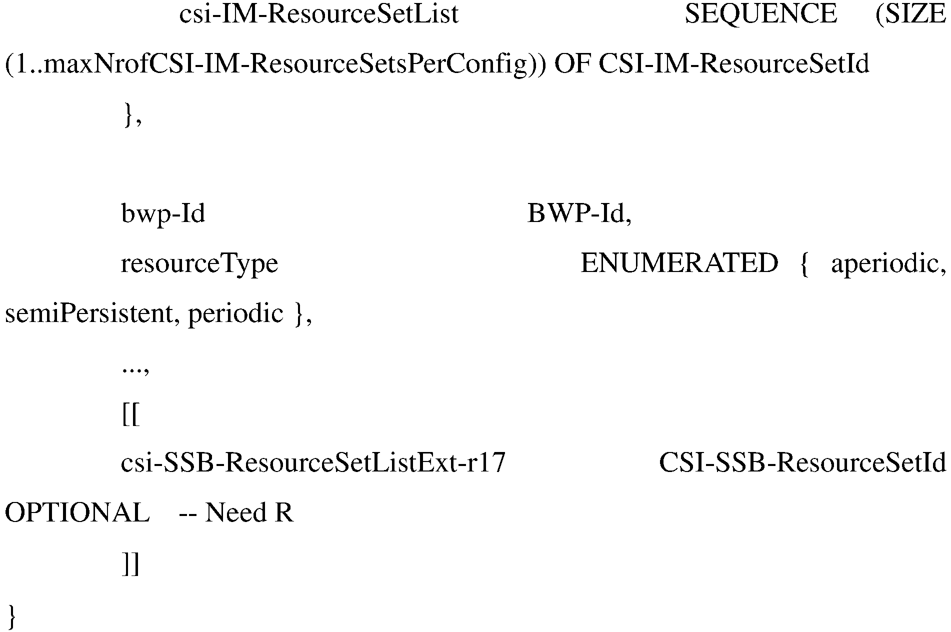

The range of associatedSRS-ResourceSetId includes all SRS resource set IDs allocated to the terminal, and the range of slotOffset is 0 to k (k is a positive integer), wherein k is the upper limit satisfying the base station's channel computation needs.

The base station may indicate whether the association relationship is valid in an explicit or implicit manner. For example, the terminal determines that the association relationship is valid only when CSI-ResourceConfig includes associatedSRS-ResourceSetId and slotOffset. Alternatively, the terminal may determine whether the association relationship is valid (or whether to activate the association relationship) through a parameter configured by the base station in RRC signaling, MAC CE signaling, or DCI signaling.

### Manner 3

The association relationship between the semi-persistent CSI-RS resource and the SRS resource is not indicated through RRC signaling. The terminal receives the MAC-CE for activating CSI reporting or CSI-RS transmission, and determines the association relationship between the CSI-RS resource and the SRS resource based on the signaling content (i.e., the identification information of the SRS resource associated with the CSI-RS resource carried in the MAC-CE).

For example, in the Aperiodic CSI Trigger State Subselection MAC CE signaling, an SRS resource set ID is configured for all or part of the activated trigger states. The terminal may determine whether the association relationship is valid by using a 1-bit indication configured by the network side in the MAC CE signaling, or implicitly determine it by means of indicating that the association relationship is valid only when an SRS resource set ID is configured for the trigger state.

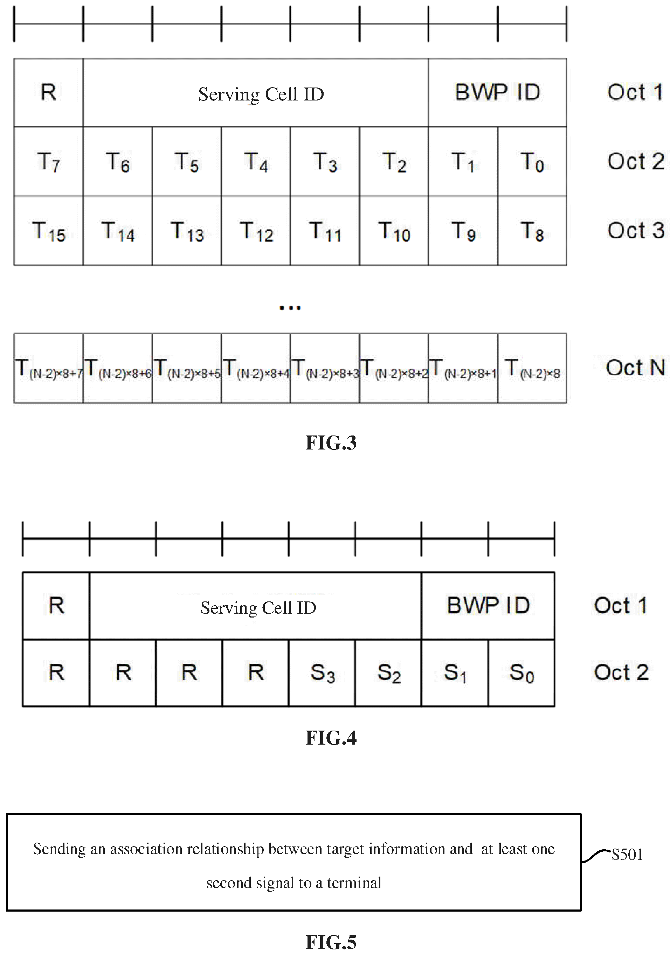

For example, a manner of adding the association relationship in the Aperiodic CSI Trigger State Subselection MAC CE signaling is shown in FIG. 3, wherein Ti in FIG. 3 indicates different aperiodic CSI trigger states, and the associated SRS resource set ID and slot offset are added at Ti corresponding to all or part of the activated trigger states.

### Manner 4

The association relationship between the CSI-RS resource and the SRS resource is not indicated through RRC signaling or MAC CE. The UE receives the DCI signaling that triggers aperiodic CSI reporting or semi-persistent CSI reporting, and determines the association relationship between the CSI-RS resource and the SRS resource based on the signaling content (i.e., the identification information of the SRS resource associated with the CSI-RS resource carried in the DCI). A newly added field in the DCI indicates whether the association relationship is valid (whether the association relationship is activated). The terminal may also determine whether the association relationship is valid (whether to activate the association relationship) based on additional indication information (e.g., an RRC parameter) configured by the base station. If the association relationship is valid, the terminal determines that the CSI-RS resource indicated by the CSI request field in the DCI is associated with the SRS resource set indicated by the SRS request field.

For example, a 1-bit field is added to the DCI signaling that triggers aperiodic CSI reporting or semi-persistent CSI reporting. A bit value of 0 in this field indicates that the association relationship between the CSI-RS resource indicated by the CSI request field and the SRS resource set indicated by the SRS request field is deactivated; a bit value of 1 in the newly added field indicates that the association relationship between the CSI-RS resource indicated by the CSI request field and the SRS resource set indicated by the SRS request field is activated.

After receiving the association relationship between the CSI-RS resource and the SRS resource sent by the base station, the terminal needs to determine the target SRS resource and the corresponding one or more pieces of parameter information.

A manner for the terminal to determine the one or more transmission parameters of the target SRS resource: when sending the target SRS resource, the terminal uses the reception port of the CSI-RS resource associated with the target SRS resource as the transmission port; when sending the target SRS resource, the terminal uses the reception frequency of the CSI-RS resource associated with the target SRS resource as the transmission frequency of the target SRS resource; when sending the target SRS resource, the terminal uses the TCI state of the CSI-RS resource associated with the target SRS resource as the TCI state of the target SRS resource, and when sending the target SRS resource, the terminal uses the reception spatial filter of the CSI-RS resource associated with the target SRS resource as the transmission spatial filter of the target SRS resource, so that the two are QCL.

It should be noted that when the reception spatial filters of the CSI-RS resources of multiple Transmission Reception Points (TRPs) are different, the terminal may use different transmission spatial filters for each SRS resource in the associated SRS resource set, wherein each transmission spatial filter corresponds to the reception spatial filter of the CSI-RS resource associated with the SRS resource. In this way, the CSI-RS resource transmitted by each TRP is QCL with the SRS resource received by the TRP.

For example, the terminal configures four SRS resource sets, which are respectively associated with the CSI-RS resource sets of four TRPs. The terminal uses the reception spatial filter of the CSI-RS resource set of each TRP as the transmission spatial filter of the associated SRS resource set. For another example, the terminal configures one SRS resource set, which includes four SRS resources respectively associated with the CSI-RS resource sets of four TRPs. The terminal uses the reception spatial filter of the CSI-RS resource set of each TRP as the transmission spatial filter of the associated SRS resource.

A manner for the terminal to determine the one or more time-domain positions for transmitting the target SRS resource is: determining the one or more time-domain positions of the target SRS resource based on the time start instant and the slot offset of the target SRS resource.

It can be understood that the terminal performs SRS transmission at the slot offset position specified by the base station based on the slot offset of the SRS resource indicated by the base station.

The start for calculating the slot offset of the SRS resource (i.e., the time start instant of the target SRS resource) may be at least one of the following: the transmission occasion of the associated CSI-RS resource, the CSI reporting instance corresponding to the associated CSI-RS resource, and the receiving occasion of the signaling for activating the association relationship.

It should be noted that the reason why the start for calculating the slot offset of the SRS resource is at least one of the foregoing is that there is no association relationship between the SRS transmission occasion and the CSI-RS transmission occasion or CSI reporting time in the current protocol. To make the CSI-RS transmission occasion or CSI reporting instance and the SRS transmission occasion for estimating uplink channel information meet the processing requirements of the network side, it is necessary to associate the SRS transmission occasion with the CSI-RS transmission occasion or CSI reporting instance associated with it, hence the foregoing start for calculating the slot offset of the SRS resource is selected.

Specifically, the specific timing of SRS transmission in this application case is as follows:
1. the terminal receives signaling, from the base station, configuring the association relationship between the CSI-RS resource and the SRS resource, establishes the association relationship between the CSI-RS resource and the SRS resource according to the signaling, and obtains the SRS slot offset;
2. the terminal determines the start for calculating the slot offset of the SRS resource according to the signaling configuring the association relationship between the CSI-RS resource and the SRS resource or other signaling from the base station, and starts timing when the start for calculating the slot offset of the SRS resource is reached;
3. when the time interval from the start to the current time reaches the slot offset of the SRS resource indicated by the base station, the terminal sends the SRS to be transmitted and determined according to the association relationship between the CSI-RS resource and the SRS resource.

Application Case 2: the terminal receives signaling, from the base station, configuring the association relationship between the CSI report configuration information and the SRS resource, wherein the signaling also indicates the slot offset of the SRS resource, and the terminal determines the target SRS and the corresponding one or more pieces of parameter information.

In this case, the target information corresponds to at least one piece of CSI report configuration information, and the association relationship between the target information and the at least one second signal refers to the association relationship between the at least one piece of CSI report configuration information and the at least one SRS resource (hereinafter simply referred to as the association relationship between the CSI report configuration information and the SRS resource); the slot offset of the second signal corresponds to the slot offset of the SRS resource.

The terminal obtains the association relationship, indicated by the base station, between the CSI-RS resource and the SRS resource in at least one of the following manners:

### Manner 1

The terminal receives the RRC signaling sent by the base station for CSI report configuration information and aperiodic CSI-RS resource configuration, and determines the association relationship between the CSI report configuration information and the SRS resource. The association relationship may also be represented as the association relationship between the CSI-RS report configuration information and the SRS resource set, wherein the SRS resource set includes one or more SRS resources. When configuring the CSI report configuration information, the RRC signaling may further indicate the SRS resource associated with each CSI report configuration information.

For example, the associated SRS resource set and slot offset (slotOffset) are added to CSI-AperiodicTriggerStateList or CSI-ReportConfig.

For example, a manner of adding the association relationship in CSI-ReportConfig is as follows:

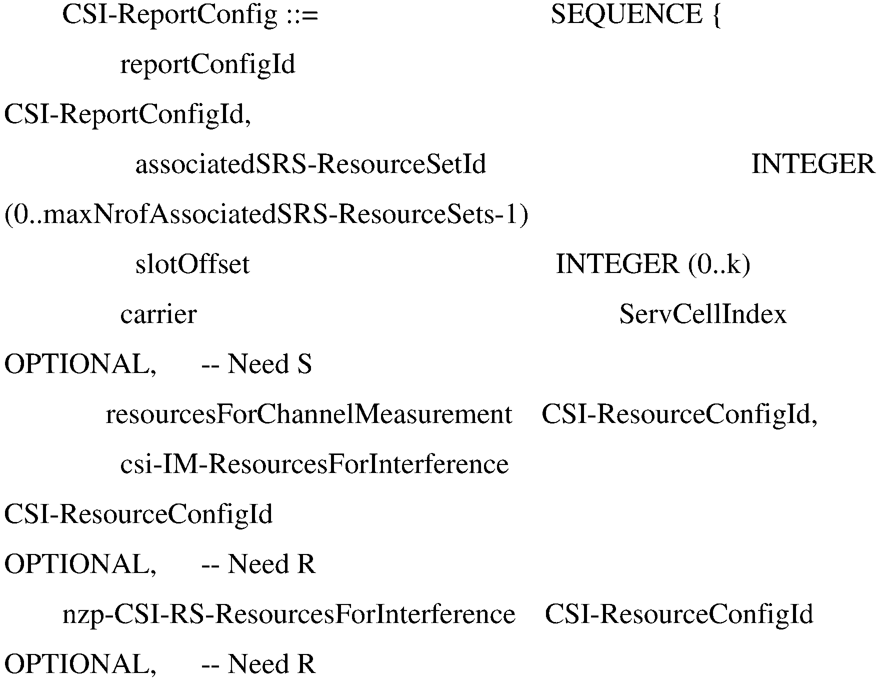

The range of associatedSRS-ResourceSetId includes all SRS resource set IDs allocated to the terminal, and the range of slotOffset is 0 to k (k is a positive integer that), wherein k is the upper limit of satisfying the base station's channel computation needs.

The base station indicates whether the association relationship is valid in an explicit or implicit manner. For example, the terminal determines that the association relationship is valid only when CSI-AperiodicTriggerStateList or CSI-ReportConfig includes associatedSRS-ResourceSetId and slotOffset. Alternatively, the terminal may determine whether the association relationship is valid (or whether to activate the association relationship) through a parameter configured by the base station in RRC signaling, MAC CE, or DCI. For example, a new 1-bit parameter or a reused unused 1-bit parameter is used: when the parameter value is 1, the terminal determines that the association relationship is valid; when the parameter value is 0, the terminal determines that the association relationship is invalid.

### Manner 2

The base station does not indicate the association relationship between the CSI report configuration information and the SRS resource through RRC signaling. The terminal receives the MAC-CE for activating CSI reporting, and determines the association relationship between the CSI report configuration information and the SRS resource based on the signaling content (i.e., the identification information of the SRS resource associated with the CSI-RS report configuration information carried in the MAC-CE).

For example, an SRS resource set ID is configured for each of all or part of the activated CSI report configuration information in the SP CSI reporting on PUCCH Activation/Deactivation MAC CE signaling. The base station may use 1-bit in the MAC CE signaling to indicate whether the association relationship is valid, or may indicate whether association relationship is valid implicitly in a manner of configuring a SRS resource set ID only for whether the CSI association relationship is valid.

For example, a manner of adding the association relationship in the SP CSI reporting on PUCCH Activation/Deactivation MAC CE signaling is shown in FIG. 4, wherein Si in FIG. 4 indicates different semi-persistent CSI report configuration activation states, and the associated SRS resource set and slot offset (slotOffset) are added at Si corresponding to all or part of the selected activation states.

### Manner 3

The base station does not indicate the association relationship between the CSI-RS report configuration information and the SRS resource through RRC signaling or MAC CE. The terminal receives the DCI signaling that triggers aperiodic CSI reporting or semi-persistent CSI reporting, and determines the association relationship between the CSI report configuration information and the SRS resource based on the signaling content (i.e., the identification information of the SRS resource associated with the CSI-RS report configuration information carried in the DCI). A newly added field in the DCI indicates whether the association relationship is valid (whether the association relationship is activated). The terminal may also determine whether the association relationship is valid (whether to activate the association relationship) based on additional indication information (e.g., an RRC parameter) configured by the base station. If the association relationship is activated, the CSI report configuration information indicated by the CSI request field in the DCI is associated with the SRS resource set indicated by the SRS request field.

After receiving the association relationship between the CSI-RS report configuration information and the SRS resource sent by the base station, the terminal needs to determine the target SRS resource and the corresponding one or more pieces of parameter information.

A manner for the terminal to determine the one or more transmission parameters of the target SRS resource is: when sending the target SRS resource, the terminal uses the reception port of the CSI-RS resource corresponding to the CSI-RS report configuration information associated with the target SRS resource as the transmission port; when sending the target SRS resource, the terminal uses the reception frequency of the CSI-RS resource corresponding to the CSI-RS report configuration information associated with the target SRS resource as the transmission frequency of the target SRS resource; when sending the target SRS resource, the terminal uses the TCI state of the CSI-RS resource corresponding to the CSI-RS report configuration information associated with the target SRS resource as the TCI state of the target SRS resource; when sending the target SRS resource, the terminal uses the reception spatial filter of the CSI-RS resource corresponding to the CSI-RS report configuration information associated with the target SRS resource as the transmission spatial filter of the target SRS resource, so that the two are QCL.

It should be noted that when the reception spatial filters of the CSI-RS resources of multiple TRPs are different, the terminal may use different transmission spatial filters for different SRS resources in the associated SRS resource set, wherein each transmission spatial filter corresponds to the reception spatial filter of the CSI-RS resource associated with the SRS resource. In this way, the CSI-RS resource transmitted by each TRP is QCL with the SRS resource received by the TRP.

For example, the terminal configures four SRS resource sets, which are respectively associated with the CSI report configurations of four TRPs. The terminal uses the reception spatial filter of the CSI-RS resource corresponding to the CSI report configuration of each TRP as the transmission spatial filter of the associated SRS resource set. For another example, the terminal configures one SRS resource set, which includes four SRS resources respectively associated with the CSI report configurations of four TRPs. The terminal uses the reception spatial filter of the CSI-RS resource corresponding to the CSI report configuration of each TRP as the transmission spatial filter of the associated SRS resource.

A manner for the terminal to determine the one or more time-domain positions for transmitting the target SRS resource is: determining the one or more time-domain positions of the target SRS resource based on the time start instant and the slot offset of the target SRS resource.

It can be understood that the terminal performs SRS transmission at the slot offset position specified by the base station based on the slot offset of the SRS resource indicated by the base station.

The start for calculating the slot offset of the SRS resource (i.e., the time start instant of the target SRS resource) may be at least one of the following: the reporting instance corresponding to the associated CSI report configuration information, the CSI-RS transmission occasion corresponding to the associated CSI report configuration information, and the receiving occasion of the signaling for activating the association relationship.

Specifically, the specific timing of SRS transmission in this application case is as follows:
1. the terminal receives signaling, from the network side, configuring the association relationship between the CSI report configuration information and the SRS resource, establishes the association relationship between the CSI report configuration information and the SRS resource according to the signaling, and obtains the slot offset of the SRS resource.
2. the terminal determines the start for calculating the slot offset of the SRS resource according to the signaling configuring the association relationship between the CSI report configuration information and the SRS resource or other signaling from the base station, and the terminal starts the timing when the start for calculating the slot offset of the SRS resource is reached.
3. when the time interval from the start to the current time reaches the slot offset of the SRS resource indicated by the base station, the terminal sends the SRS to be transmitted determined according to the association relationship between the CSI report configuration information and the SRS resource.

Application Case 3: the terminal receives signaling, from the base station, configuring the association relationship between the CSI-RS resource and the SRS resource, wherein the signaling does not indicate the slot offset of the SRS resource, and the terminal determines the target SRS and the corresponding one or more pieces of parameter information.

In this case, the target information corresponds to at least one CSI-RS resource, and the association relationship between the target information and the at least one second signal refers to the association relationship between the at least one CSI-RS resource and the at least one SRS resource (hereinafter simply referred to as the association relationship between the CSI-RS resource and the SRS resource).

For obtaining the method for the terminal to determine the association relationship between the CSI-RS resource and the SRS resource indicated by the base station according to the signaling, please refer to Application Case 1, which is not repeated herein. However, in this case, the base station no longer indicates the slot offset of the SRS resource.

For the manner for the terminal to determine the one or more transmission parameters of the target SRS resource, refer to Application Case 1, which is not repeated herein.

The terminal determines the transmission occasion of the CSI-RS resource in establishment of the association relationship between the CSI-RS resource and the SRS resource indicated by the base station, and the reporting instance corresponding to the CSI measured by the CSI-RS resource, based on the signaling. On this basis, the terminal may determine the one or more time-domain positions for transmitting the SRS resource and send the SRS in at least one of the following manners, and the corresponding base station monitors in the corresponding time-domain position:
E11: if the terminal receives the DCI signaling that triggers aperiodic or semi-persistent CSI reporting, the terminal transmits the SRS through the target SRS resource in the next available time unit;
E12: according to the obtained CSI-RS transmission occasion, the terminal transmits the SRS through the target SRS resource in the m-th available time unit before or after the CSI-RS transmission slot/symbol;
E13: based on the CSI reporting instance, the terminal transmits the SRS through the target SRS resource in the n-th available time unit before or after the CSI report slot/symbol;
E14: the terminal calculates all available time units in the three cases of E11-E13, and transmits the SRS through the target SRS resource using the available time unit with the minimum interval from the CSI-RS transmission occasion or the CSI reporting instance;
E15: the terminal attempts to transmit the SRS through the target SRS resource in Y available time units before or after the CSI-RS transmission slot/symbol, and no longer transmits the SRS after successful transmission;
E16: the terminal attempts to transmit the SRS through the target SRS resource in X available time units before or after the CSI report slot/symbol, and no longer transmits the SRS after successful transmission.

Specifically, the specific timing of SRS transmission in this application case is as follows:
1. the terminal receives signaling, from the base station, configuring the association relationship between the CSI-RS resource and the SRS resource, and establishes the association relationship between the CSI-RS resource and the SRS resource according to the signaling;
2. the terminal determines the transmission occasion of the CSI-RS resource in establishment of the association relationship between the CSI-RS resource and the SRS resource indicated by the base station, and the reporting instance corresponding to the CSI measured by the CSI-RS resource, based on the signaling configuring the association relationship between the CSI-RS resource and the SRS resource or other signaling from the base station;
3. according to different manners for the terminal to determine the one or more time-domain positions for transmitting the SRS resource, the following possible timing relationships exist:
   Case 1: if the terminal receives the DCI signaling that triggers aperiodic or semi-persistent CSI reporting, the terminal transmits the SRS in the next available time unit; in this case, the timing relationship is: the terminal first receives the DCI signaling that triggers aperiodic or semi-persistent CSI reporting, calculates the next available time unit, and transmits the SRS in the time unit.
   Case 2: the terminal transmits the SRS in the m-th available time unit before or after the CSI-RS transmission slot/symbol based on the obtained CSI-RS transmission occasion; if the m-th available time unit before the obtained CSI-RS transmission slot/symbol is selected to transmit the associated SRS, the timing relationship is: the terminal first receives the signaling, sent by the base station, indicating CSI-RS transmission, and obtains the CSI-RS transmission occasion based on the signaling; and then, the terminal transmits the SRS in the m-th available time unit before the obtained CSI-RS transmission slot/symbol, and then the terminal receives the CSI-RS sent by the base station.
      If the m-th available time unit after the obtained CSI-RS transmission slot/symbol is selected to transmit the SRS, the timing relationship is: the terminal first receives the signaling, sent by the base station, indicating CSI-RS transmission, and obtains the CSI-RS transmission occasion based on the signaling; then, the terminal receives the CSI-RS sent by the base station; subsequently, the terminal transmits the associated SRS in the m-th available time unit after the obtained CSI-RS transmission slot/symbol.
   Case 3: the terminal transmits the SRS in the n-th available time unit before or after the CSI report slot/symbol based on the CSI reporting instance;
      if the m-th available time unit before the obtained CSI report slot/symbol is selected to transmit the associated SRS, the timing relationship is: the terminal first receives the signaling indicating CSI reporting from the base station and obtains the CSI reporting instance according to the signaling; then, the terminal transmits the associated SRS in the m-th available time unit before the obtained CSI report slot/symbol; subsequently, the terminal performs CSI reporting.
      If the m-th available time unit after the obtained CSI report slot/symbol is selected to transmit the associated SRS, the timing relationship is: the terminal first receives the signaling indicating CSI reporting from the base station and obtains the CSI reporting instance according to the signaling; then, the terminal performs CSI reporting; subsequently, the terminal transmits the associated SRS in the m-th available time unit after the CSI report slot/symbol.
   Case 4: the terminal calculates all available time units in the foregoing three cases and selects the available time unit with the minimum interval from the CSI-RS transmission occasion or the CSI reporting instance to transmit the SRS;
      if the selected SRS transmission occasion is closest to the CSI-RS transmission occasion and before the CSI-RS transmission occasion, the timing relationship is: the terminal first receives the signaling, sent by the base station, indicating CSI-RS transmission, and obtains the CSI-RS transmission occasion based on the signaling; then, the terminal transmits the associated SRS in the first available time unit before the obtained CSI-RS transmission slot/symbol; subsequently, the terminal receives the CSI-RS sent by the base station.
      If the selected SRS transmission occasion is closest to the CSI-RS transmission occasion and after the CSI-RS transmission occasion, the timing relationship is: the terminal first receives the signaling, sent by the base station, indicating CSI-RS transmission, and obtains the CSI-RS transmission occasion based on the signaling; then, the terminal receives the CSI-RS sent by the base station; subsequently, the terminal transmits the SRS in the first available time unit after the obtained CSI-RS transmission slot/symbol.
      If the selected SRS transmission occasion is closest to the CSI reporting instance and before the CSI reporting instance, the timing relationship is: the terminal first receives the signaling indicating CSI reporting from the base station and obtains the CSI reporting instance according to the signaling. Then, the terminal transmits the SRS in the first available time unit before the obtained CSI report slot/symbol. Subsequently, the terminal performs CSI reporting.
      If the selected SRS transmission occasion is closest to the CSI reporting instance and after the CSI reporting instance, the timing relationship is: the terminal first receives the signaling, indicating CSI reporting, from the base station and obtains the CSI reporting instance according to the signaling. Then, the terminal performs CSI reporting. Subsequently, the terminal transmits the SRS in the first available time unit after the CSI report slot/symbol.
   Case 5: the terminal attempts to transmit the SRS in m available time units before or after the CSI-RS transmission slot/symbol, and stops transmitting the SRS after successful transmission; if it is selected to attempt transmitting the SRS in m available time units before the obtained CSI-RS transmission slot/symbol and stop after successful transmission, the timing relationship is: the terminal first receives the signaling, sent by the base station, indicating CSI-RS transmission, and obtains the CSI-RS transmission occasion based on the signaling. Then, the terminal attempts to transmit the SRS in m available time units before the obtained CSI-RS transmission slot/symbol until the transmission is successful or all available time units are traversed. Subsequently, the terminal receives the CSI-RS sent by the network side.
      If it is selected to attempt transmitting the SRS in m available time units after the obtained CSI-RS transmission slot/symbol and stop after successful transmission, the timing relationship is: the terminal first receives the signaling sent by the base station indicating CSI-RS transmission, and obtains the CSI-RS transmission occasion based on the signaling. Then, the terminal receives the CSI-RS sent by the base station. Subsequently, the terminal attempts to transmit the associated SRS in m available time units after the obtained CSI-RS transmission slot/symbol until the transmission is successful or all available time units are traversed.
   Case 6: the terminal attempts to transmit the SRS in n available time units before or after the CSI report slot/symbol, and stops transmitting the SRS after successful transmission.
      If it is selected to attempt transmitting the associated SRS in m available time units before the obtained CSI report slot/symbol and stop after successful transmission, the timing relationship is: the terminal first receives the signaling indicating CSI reporting from the base station and obtains the CSI reporting instance according to the signaling. Then, the terminal attempts to transmit the associated SRS in m available time units before the obtained CSI report slot/symbol until the transmission is successful or all available time units are traversed. Subsequently, the terminal performs CSI reporting.
      If it is selected to attempt transmitting the SRS in m available time units after the obtained CSI report slot/symbol and stop after successful transmission, the timing relationship is: the terminal first receives the signaling indicating CSI reporting from the base station and obtains the CSI reporting instance based on the signaling. Then, the terminal performs CSI reporting. Subsequently, the terminal attempts to transmit the SRS in m available time units after the CSI report slot/symbol until the transmission is successful or all available time units are traversed.

Application Case 4: the terminal receives signaling, from the base station, configuring the association relationship between the CSI report configuration information and the SRS resource, wherein the signaling does not indicate the slot offset of the SRS resource, and the terminal determines the target SRS and the corresponding one or more pieces of parameter information.

In this case, the target information corresponds to at least one piece of CSI report configuration information, and the association relationship between the target information and the at least one second signal refers to the association relationship between the at least one piece of CSI report configuration information and the at least one SRS resource (hereinafter simply referred to as the association relationship between the CSI report configuration information and the SRS resource).

For obtaining the method for the terminal to determine the association relationship between the CSI report configuration information and the SRS resource indicated by the base station based on the signaling, refer to Application Case 2, which is not repeated herein. However, in this case, the base station no longer indicates the slot offset of the SRS resource.

For the manner for the terminal to determine the one or more transmission parameters of the target SRS resource, refer to Application Case 2, which is not repeated herein.

The terminal determines, based on the signaling, the CSI reporting instance in establishment of the association relationship between the CSI report configuration information and the SRS resource indicated by the network side, and the CSI-RS resource transmission occasion corresponding to the CSI report configuration information. On this basis, the terminal may determine the one or more time-domain positions for transmitting the SRS resource and send the SRS in at least one of the following manners, and the corresponding base station monitors in the corresponding time-domain position:
E21: if the terminal receives the DCI signaling that triggers aperiodic or semi-persistent CSI reporting, the terminal transmits the SRS through the target SRS resources in the next available time unit;
E22: according to the obtained CSI-RS transmission occasion, the terminal transmits the SRS through the target SRS resources in the m-th available time unit before or after the CSI-RS transmission slot/symbol;
E23: based on the CSI reporting instance, the terminal transmits the SRS through the target SRS resources in the n-th available time unit before or after the CSI report slot/symbol;
E24: the terminal calculates all available time units in the three cases of E21-E23, and selects the available time unit with the minimum interval from the CSI-RS transmission occasion or the CSI reporting instance to transmit the SRS through the target SRS resources;
E25: the terminal attempts to transmit the SRS through the target SRS resources in Y available time units before or after the CSI-RS transmission slot/symbol, and stops transmitting the SRS after successful transmission;
E26: the terminal attempts to transmit the SRS through the target SRS resources in X available time units before or after the CSI report slot/symbol, and stops transmitting the SRS after successful transmission.

It should be noted that the main difference between Application Case 4 and Application Case 3 is: Application Case 4 establishes the association relationship between the CSI report configuration information and the SRS resource, while Application Case 3 establishes the association relationship between the CSI-RS resource and the SRS resource.

Specifically, the specific timing of SRS transmission in this application case is as follows:
1. the terminal receives signaling, from the base station, configuring the association relationship between the CSI report configuration information and the SRS resource, and establishes the association relationship between the CSI report configuration information and the SRS resource according to the signaling;
2. the terminal determines, based on the signaling configuring the association relationship between the CSI report configuration information and the SRS resource or other signaling from the base station, the CSI reporting instance in establishment of the association relationship between the CSI report configuration information and the SRS resource indicated by the base station, and the transmission occasion of the CSI-RS corresponding to the CSI report configuration information;
3. for the specific timing relationships corresponding to different manners for the terminal to determine the one or more time-domain positions for transmitting the SRS resource, refer to the specific timing relationships in Application Case 3, which is not repeated herein.

It should be noted that, preferably, the embodiments of the present disclosure propose an SRS triggering method based on the association relationship between the CSI-RS resource or CSI report configuration information and the SRS resource. According to the embodiments of the present disclosure, the terminal can, according to the configuration of the network side, make the time of CSI-RS transmission or CSI report and the SRS transmission occasion for estimating uplink channel information meet the processing requirements of the network side, and ensure that the two correspond to the same one or more transmission parameters, thereby ensuring that the two correspond to the same TCI state or Quasi-Co-Located (QCL) parameters; in this way, the accuracy of the calibration coefficient calculated by the network side is ensured.

The technical solutions provided in the embodiments of the present disclosure may be applied to various systems, especially 5G systems. For example, the applicable systems may include the Global System for Mobile Communications (GSM) system, Code Division Multiple Access (CDMA) system, Wideband Code Division Multiple Access (WCDMA) General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide Interoperability for Microwave Access (WiMAX) system, 5G New Radio (NR) system, etc. Each of these systems includes a terminal (also referred to as a terminal device) and a network device. The system may further include a core network part, such as the Evolved Packet System (EPS), 5G System (5GS), etc.

The terminal in the embodiments of the present disclosure may also be referred to as a terminal device, which may be a device that provides voice and/or data connectivity to a user, a handheld device with a wireless connection function, or another processing device connected to a wireless modem. In different systems, the name of the terminal device may vary; for example, in a 5G system, the terminal device may be referred to as User Equipment (UE). The wireless terminal device may communicate with one or more Core Networks (CN) through a Radio Access Network (RAN). The wireless terminal device may be a mobile terminal device, such as a mobile phone (also referred to as a "cellular" phone) and a computer with a mobile terminal device. For example, it may be one or more portsable, pocket-sized, handheld, computer-built-in, or vehicle-mounted mobile device that exchanges language and/or data with a radio access network. Examples include Personal Communication Service (PCS) phones, cordless phones, Session Initiated Protocol (SIP) phones, Wireless Local Loop (WLL) stations, or Personal Digital Assistants (PDAs). The wireless terminal device may also be referred to as a system, a subscriber unit, a subscriber station, a mobile station, a mobile, a remote station, an access point, a remote terminal, an access terminal, a user terminal, a user agent, or a user device, which is not limited in the embodiments of the present disclosure.

The network device in the embodiments of the present disclosure may be a base station, and the base station may include a plurality of cells serving the terminal. According to different specific application scenarios, the base station may also be referred to as an access point, or a device in an access network that communicates with a wireless terminal device through one or more sectors on an air interface, or by another name. The network device may be configured to exchange received over-the-air frames with Internet Protocol (IP) packets as a router between the wireless terminal device and the rest of the access network, wherein the rest of the access network may include an IP communication network. The network device may also coordinate attribute management of the air interface. For example, the network device in the embodiments of the present disclosure may be a Base Transceiver Station (BTS) in a Global System for Mobile communications (GSM) or Code Division Multiple Access (CDMA) system, a NodeB in a WCDMA system, an Evolved Node B (eNB or e-NodeB) in an LTE system, a 5G base station (gNB) in a next-generation system, a Home Evolved Node B (HeNB), a relay node, a home base station (femto), a pico base station, etc., which is not limited in the embodiments of the present disclosure. In some network structures, the network device may include a Central Unit (CU) node and a Distributed Unit (DU) node, and the centralized unit and the distributed unit may also be geographically separated.

The network device and the terminal device may each use one or more antennas to perform Multi-Input Multi-Output (MIMO) transmission, and the MIMO transmission may be Single-User MIMO (SU-MIMO) or Multi-User MIMO (MU-MIMO). According to the form and quantity of the antenna combinations, the MIMO transmission may be Two-Dimensional MIMO (2D-MIMO), Three-Dimensional MIMO (3D-MIMO), Full Dimension MIMO (FD-MIMO), or massive MIMO, or may be diversity transmission, precoding transmission, or beamforming transmission.

As shown in FIG. 5, an embodiment of the present disclosure provides an information transmission method performed by a network device, including following steps.

Step S501: sending the association relationship between the target information and the at least one second signal to the terminal;
the target information includes at least one of the following: at least one first signal and at least one piece of Channel State Information (CSI) report configuration information.

It should be noted that the first signal in the embodiments of the present disclosure is a reference signal sent by the network device to the terminal for downlink channel measurement; for example, the first signal may be a Channel State Information Reference Signal (CSI-RS) (also referred to as a CSI-RS resource), a Tracking Reference Signal (TRS) (also referred to as a TRS resource), etc. The second signal is a reference signal sent by the terminal to the network device for uplink channel measurement; for example, the second signal may be a Sounding Reference Signal (SRS) (also referred to as an SRS resource).

It should be noted that the CSI report configuration information refers to the relevant configuration for the terminal to report the measurement result of the first signal. The CSI report configuration information may include the first signal for which the measurement result needs to be reported, the resources used for reporting the result, etc. It can be understood that the CSI report configuration information has an association relationship with the first signal, that is, the first signals associated with the CSI report configuration information can be determined through one piece of CSI report configuration information.

It should be noted that, in the embodiments of the present disclosure, by sending the association relationship between the at least one first signal and/or the at least one piece of CSI report configuration information and the at least one second signal to the terminal, the terminal can determine the target second signal and the one or more pieces of parameter information of the target second signal based on the association relationship, so as to send the target second signal. This enables the terminal to transmit the target second signal in a timely manner, thereby improving the accuracy of the calibration coefficient calculated by the network side.

In some embodiments, the method further includes: determining the one or more time-domain positions of the target second signal; and receiving the target second signal at the one or more time-domain positions.

In some embodiments, in a first implementation manner, the determining the one or more time-domain positions of the target second signal includes: determining the one or more time-domain positions of the target second signal according to the time start instant and the slot offset of the target second signal.

The time start instant includes at least one of the following:
F11: the transmission occasion of the first signal associated with the target second signal;
F12: the CSI reporting instance corresponding to the first signal associated with the target second signal; it should be noted that F11 and F12 are mainly applicable to the association relationship between at least one first signal and at least one second signal;
F13: the reporting instance corresponding to the CSI report configuration information associated with the target second signal;
F14: the transmission occasion of the first signal corresponding to the CSI report configuration information associated with the target second signal; it should be noted that F13 and F14 are mainly applicable to the association relationship between at least one piece of CSI report configuration information and at least one second signal;
F15: the receiving occasion of the signaling for activating the association relationship; it should be noted that the aforementioned F15 is applicable to both the association relationship between at least one piece of CSI report configuration information and at least one second signal, and the association relationship between at least one first signal and at least one second signal.

In some embodiments, the determining the one or more time-domain positions of the target second signal includes one of the following:
F21: determining the one or more first transmission occasions as the one or more time-domain positions of the target second signal; it should be noted that the available time units mentioned herein and subsequently may be slots or symbols.

In some embodiments, one or more first transmission occasions include at least one of the following:
F211: the next available time unit of the DCI signaling that triggers aperiodic CSI or semi-persistent CSI reporting;
F212: the m-th available time unit before or after the transmission occasion of the first signal associated with the target second signal, wherein m is an integer greater than or equal to 1; it should be noted that the first signal associated with the target second signal herein may be the first signal directly indicated in the association relationship, or the first signal corresponding to the CSI report configuration information indicated in the association relationship; in some embodiments, m is a protocol convention (or predefined) or determined by the network device;
F213: the n-th available time unit before or after the CSI reporting instance corresponding to the first signal associated with the target second signal, wherein n is an integer greater than or equal to 1; it should be noted that the first signal associated with the target second signal herein may be the first signal directly indicated in the association relationship, or the first signal corresponding to the CSI report configuration information indicated in the association relationship. In some embodiments, n is a protocol convention (or predefined) or determined by the network device.

F22: determining the second transmission occasion among the one or more first transmission occasions as the one or more time-domain positions of the target second signal, wherein the second transmission occasion is the available time unit in the first transmission occasions that has the minimum interval from the transmission occasion of the first signal or the CSI reporting instance corresponding to the first signal.

F23: determining the one or more third transmission occasions as the one or more time-domain positions of the target second signal; in some embodiments, the one or more third transmission occasions include at least one of the following:
F231: Y available time units before or after the transmission occasion of the first signal associated with the target second signal, wherein Y is an integer greater than or equal to 1; it should be noted that the first signal associated with the target second signal herein may be the first signal directly indicated in the association relationship, or the first signal corresponding to the CSI report configuration information indicated in the association relationship; In some embodiments, Y is a protocol convention (or predefined) or determined by the network device;
F232: X available time units before or after the CSI reporting instance corresponding to the first signal associated with the target second signal, wherein X is an integer greater than or equal to 1; it should be noted that the first signal associated with the target second signal herein may be the first signal directly indicated in the association relationship, or the first signal corresponding to the CSI report configuration information indicated in the association relationship.

In some embodiments, Y is a protocol convention (or predefined) or determined by the network device.

It should be noted that there may be multiple transmission occasions determined by each of F231 and F232 in this case. In actual use, the network device monitors the target second signal on each transmission occasion in the order of the transmission occasions. Once the target second signal is successfully received on a certain transmission occasion, the network device stops monitoring the target second signal on all subsequent transmission occasions.

In some embodiments, the sending the association relationship between the target information and the at least one second signal to the terminal includes:
sending the association relationship between the target information and the at least one second signal to the terminal through the association relationship indication signaling;
wherein the association relationship indication signaling includes at least one of the following: RRC signaling; MAC CE; downlink Control Information (DCI).

In some embodiments, the association relationship indication signaling includes one of the following:
identification information of the second signal associated with the first signal, in which case the association relationship indication signaling may be RRC signaling or MAC CE;
identification information of the second signal associated with the CSI report configuration information, in which case the association relationship indication signaling may be RRC signaling or MAC CE;
the identification information of the target information and the second signal, in which case the association relationship indication signaling may be DCI.

In some embodiments, the MAC CE is configured to activate CSI reporting or activate the transmission of the first signal.

In some embodiments, the association relationship indication signaling is used to implicitly or explicitly indicate whether the association relationship is valid.

In some embodiments, the association relationship indication signaling includes the slot offset of the second signal.

In some embodiments, the method further includes: sending indication information to the terminal, wherein the indication information is used to indicate whether to activate the association relationship.

It should be noted that all implementation manners in the foregoing embodiments are applicable to the embodiments of the information transmission method applied to the network device side, and the same technical effects can also be achieved, which are not repeated herein.

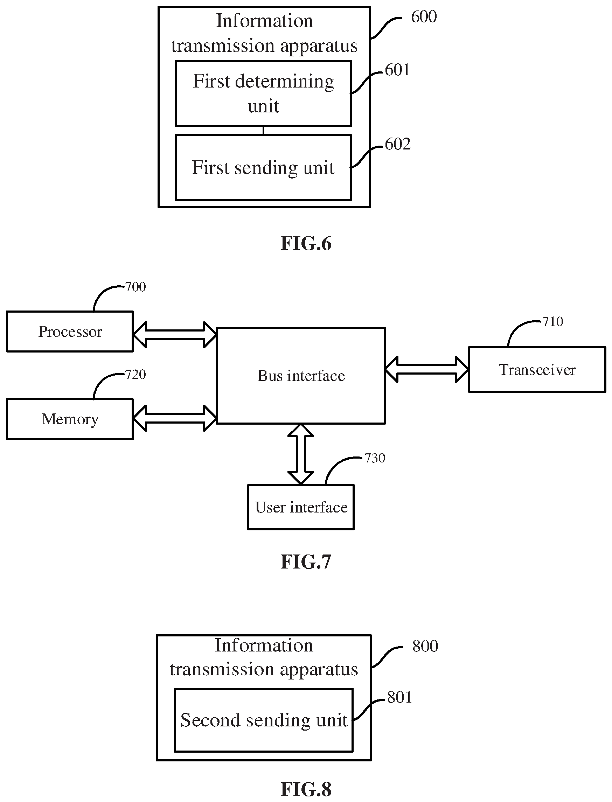

As shown in FIG. 6, an embodiment of the present disclosure provides an information transmission apparatus 600, applied to a terminal. The terminal includes:
a first determining unit 601, configured to determine the target second signal and the one or more pieces of parameter information of the target second signal according to the association relationship between the target information and the at least one second signal;
a first sending unit 602, configured to transmit the target second signal to the network device according to the one or more pieces of parameter information;
the target information includes at least one of the following: at least one first signal and at least one piece of Channel State Information (CSI) report configuration information.

In some embodiments, the first determining unit 601 is configured to implement at least one of the following:
determining one or more time-domain positions of the target second signal; and
determining one or more transmission parameters of a first signal associated with the target second signal as one or more transmission parameters of the target second signal.

In some embodiments, the specific implementation of determining the one or more time-domain positions of the target second signal includes:
determining the one or more time-domain positions of the target second signal according to the time start instant and the time slot offset of the target second signal;
wherein the time start instant includes at least one of the following:
   a transmission occasion of a first signal associated with the target second signal; and
   a CSI reporting instance corresponding to a first signal associated with the target second signal; and
   a reporting instance corresponding to CSI reporting configuration information associated with the target second signal;
   a transmission occasion of a first signal corresponding to CSI reporting configuration information associated with the target second signal; and
   a receiving occasion of signaling that activates the association relationship.

In some embodiments, the specific implementation of determining the one or more time-domain positions of the target second signal includes one of the following:
determining one or more first transmission occasions as the one or more time-domain positions of the target second signal;
determining a second transmission occasion in the one or more first transmission occasions as the one or more time-domain positions of the target second signal, wherein the second transmission occasion is an available time unit in the one or more first transmission occasions that has the minimum interval from the transmission occasion or CSI reporting instance of the first signal; and
determining one or more first transmission occasions as the one or more time-domain positions of the target second signal; and
wherein the one or more first transmission occasions include at least one of the following:
   the next available time unit of the received signaling that triggers aperiodic CSI or semi-persistent CSI reporting;
   the m-th available time unit before or after the transmission occasion of the first signal associated with the target second signal (where m is an integer greater than or equal to 1);
   the n-th available time unit before or after the CSI reporting instance corresponding to the first signal associated with the target second signal (where n is an integer greater than or equal to 1);
   the one or more third transmission occasions include at least one of the following:
      Y available time units before or after the transmission occasion of the first signal associated with the target second signal (where Y is an integer greater than or equal to 1);
      X available time units before or after the CSI reporting instance corresponding to the first signal associated with the target second signal (where X is an integer greater than or equal to 1).

In some embodiments, the specific implementation of determining the one or more transmission parameters of the first signal associated with the target second signal as the one or more transmission parameters of the target second signal includes at least one of the following:
determining the TCI state of the first signal associated with the target second signal as the TCI state of the target second signal;
determining the one or more QCL parameters of the first signal associated with the target second signal as the one or more QCL parameters of the target second signal; and
determining the one or more ports of receiving the first signal associated with the target second signal as the one or more ports of sending the target second signal;
determining the frequency for receiving the first signal associated with the target second signal as the frequency for sending the target second signal; and
determining the spatial filter for receiving the first signal associated with the target second signal as the spatial filter for transmitting the target second signal.

In some embodiments, the apparatus further includes: an obtaining unit, configured to obtain the association relationship according to the association relationship indication signaling; and the association relationship indication signaling includes at least one of the following: radio Resource Control (RRC) signaling; a Media Access Control Control Element (MAC CE); downlink Control Information (DCI).

In some embodiments, the obtaining unit is configured to implement one of the following:
obtaining the association relationship between the target information and the at least one second signal according to the identification information of the second signal associated with the first signal and carried in the association relationship indication signaling;
obtaining the association relationship between the target information and the at least one second signal according to the identification information of the second signal associated with the CSI reporting configuration information and carried in the association relationship indication signaling; and
obtaining the association relationship between the target information and the at least one second signal according to the target information and the identification information of the second signal indicated in the association relationship indication signaling.

In some embodiments, the MAC CE is configured to activate CSI reporting or activate the first signal transmission.

In some embodiments, the association relationship indication signaling is used to implicitly or explicitly indicate whether the association relationship takes effect.

In some embodiments, the association relationship indication signaling includes the slot offset of the second signal.

In some embodiments, the apparatus further includes:
a first receiving unit, configured to receive indication information sent by a network device, wherein the indication information is used to indicate whether to activate the association relationship.

In some embodiments, the specific implementation of obtaining the association relationship between the target information and the at least one second signal according to the target information and the identification information of the second signal indicated in the association relationship indication signaling includes:
if the indication information indicates to activate the association relationship, obtaining the association relationship between the target information and the at least one second signal according to the target information and the identification information of the second signal indicated in the association relationship indication signaling.

In some embodiments, the first determining unit 601 is configured to:
when the association relationship between the target information and the at least one second signal is valid, determine the target second signal corresponding to the one or more target parameters and the one or more pieces of parameter information of the target second signal according to the association relationship between the target information and the at least one second signal.

It should be noted that the apparatus embodiment corresponds to the foregoing method embodiment one-to-one, and all implementations in the foregoing method embodiments are applicable to this apparatus embodiment and can achieve the same technical effects.

It should be noted that the division of units in the embodiments of the present disclosure is schematic and merely a logical function division, and there may be other division manners in actual implementation. In addition, the functional units in the embodiments of the present disclosure may be integrated into one processing unit, or each unit may exist independently physically, or two or more units may be integrated into one unit. The integrated unit may be implemented in the form of hardware or a software functional unit.

When the integrated unit is implemented in the form of a software functional unit and sold or used as an independent product, it may be stored in a processor-readable storage medium. Based on this understanding, the technical solution of the present disclosure essentially or the part contributing to the related art, or all or part of the technical solution, may be embodied in the form of a software product. The computer software product is stored in a storage medium and includes several instructions to enable a computer device (which may be a personal computer, a server, a network device, etc.) or a processor to execute all or part of the steps of the method described in the embodiments of the present disclosure. The foregoing storage medium includes various media that can store program codes, such as a USB flash drive, a removable hard disk, a Read-Only Memory (ROM), a Random Access Memory (RAM), a magnetic disk, or an optical disk.

As shown in FIG. 7, an embodiment of the present disclosure further provides a terminal, including a processor 700, a transceiver 710, a memory 720, and a program stored on the memory 720 and executable on the processor 700. The transceiver 710 is connected to the processor 700 and the memory 720 through a bus interface. The processor 700 is configured to read the program in the memory and perform the following processes:
determining a target second signal and one or more pieces of parameter information of the target second signal based on the association relationship between the target information and the at least one second signal; and
sending the target second signal to the network device through the transceiver based on the one or more pieces of parameter information; the target information includes at least one of the following: at least one first signal and at least one piece of Channel State Information (CSI) reporting configuration information.

The transceiver 710 is configured to receive and transmit data under the control of the processor 700.

In FIG. 7, the bus architecture may include any number of interconnected buses and bridges. Specifically, the various circuits of one or more processors represented by the processor 700 and the memory represented by the memory 720 are linked together. The bus architecture may also link various other circuits such as peripheral devices, voltage regulators, and power management circuits, which are well known in the art and therefore will not be further described herein. The bus interface provides an interface. The transceiver 710 may be multiple components, i.e., including a transmitter and a receiver, providing a unit for communicating with various other devices on a transmission medium, wherein the transmission medium includes wireless channels, wired channels, optical cables, etc. For different user devices, the user interface 730 may also be an interface capable of externally connecting to required devices, and the connected devices include but are not limited to a keypad, a display, a speaker, a microphone, a joystick, and the like.

The processor 700 is responsible for managing the bus architecture and general processing, and the memory 720 may store data used by the processor 700 when performing operations.

In some embodiments, the processor 700 may be a CPU (Central Processing Unit), an ASIC (Application Specific Integrated Circuit), an FPGA (Field-Programmable Gate Array), or a CPLD (Complex Programmable Logic Device), and the processor may also adopt a multi-core architecture.

By invoking the computer program stored in the memory, the processor is configured to execute any one of the methods provided in the embodiments of the present disclosure according to the obtained executable instructions. The processor and the memory may also be arranged separately in physical form.

In some embodiments, the processor is configured to read the computer program in the memory and perform at least one of the following operations:
determining the one or more time-domain positions of the target second signal;
determining the one or more transmission parameters of the first signal associated with the target second signal as the one or more transmission parameters of the target second signal.

In some embodiments, the processor is configured to read the computer program in the memory and perform the following operations:
determining the one or more time-domain positions of the target second signal according to the time start instant and the time slot offset of the target second signal;
wherein the time start instant includes at least one of the following:
   a transmission occasion of the first signal associated with the target second signal;
   a CSI reporting instance corresponding to the first signal associated with the target second signal; and
   a reporting instance corresponding to the CSI reporting configuration information associated with the target second signal;
   a transmission occasion of the first signal corresponding to the CSI reporting configuration information associated with the target second signal; and
   a receiving occasion of the signaling that activates the association relationship.

In some embodiments, the processor is configured to read the computer program in the memory and perform one of the following operations:
determining the one or more first transmission occasions as the one or more time-domain positions of the target second signal;
determining the second transmission occasion in the one or more first transmission occasions as the one or more time-domain positions of the target second signal, wherein the second transmission occasion is an available time unit in the one or more first transmission occasions that has the minimum interval from the transmission occasion or CSI reporting instance of the first signal;
determining the one or more third transmission occasions as the one or more time-domain positions of the target second signal; and
wherein the one or more first transmission occasions include at least one of the following:
   the next available time unit of the received signaling that triggers aperiodic CSI or semi-persistent CSI reporting;
   the m-th available time unit before or after the transmission occasion of the first signal associated with the target second signal (where m is an integer greater than or equal to 1);
   the n-th available time unit before or after the CSI reporting instance corresponding to the first signal associated with the target second signal (where n is an integer greater than or equal to 1);
   wherein the one or more third transmission occasions include at least one of the following:
      the obtained Y available time units before or after the transmission occasion of the first signal associated with the target second signal (where Y is an integer greater than or equal to 1);
      the X available time units before or after the CSI reporting instance corresponding to the first signal associated with the target second signal (where X is an integer greater than or equal to 1).

In some embodiments, the processor is configured to read the computer program in the memory and perform at least one of the following operations:
determining the TCI state of the first signal associated with the target second signal as the TCI state of the target second signal;
determining the one or more QCL parameters of the first signal associated with the target second signal as the one or more QCL parameters of the target second signal; and
determining the one or more ports for receiving the first signal associated with the target second signal as the one or more ports for sending the target second signal;
determining the frequency for receiving the first signal associated with the target second signal as the frequency for sending the target second signal; and
determining the spatial filter for receiving the first signal associated with the target second signal as the spatial filter for transmitting the target second signal.

In some embodiments, the processor is configured to read the computer program in the memory and further perform the following operations:
obtaining the association relationship according to the association relationship indication signaling;
wherein the association relationship indication signaling includes at least one of the following: Radio Resource Control (RRC) signaling; Media Access Control Control Element (MAC CE); downlink Control Information (DCI).

In some embodiments, the processor is configured to read the computer program in the memory and perform one of the following operations:
obtaining the association relationship between the target information and the at least one second signal according to the identification information of the second signal associated with the first signal and carried in the association relationship indication signaling; and
obtaining the association relationship between the target information and the at least one second signal according to the identification information of the second signal associated with the CSI reporting configuration information and carried in the association relationship indication signaling; and
obtaining the association relationship between the target information and the at least one second signal according to the target information and the identification information of the second signal indicated in the association relationship indication signaling.

In some embodiments, the MAC CE is configured to activate CSI reporting or activate the first signal transmission.

In some embodiments, the association relationship indication signaling is used to implicitly or explicitly indicate whether the association relationship takes effect.

In some embodiments, the association relationship indication signaling includes the slot offset of the second signal.

In some embodiments, the processor is configured to read the computer program in the memory and further perform the following operations:
receiving via the transceiver the indication information sent by the network device, wherein the indication information is used to indicate whether to activate the association relationship.

In some embodiments, the processor is configured to read the computer program in the memory and perform the following operations:
if the indication information indicates to activate the association relationship, obtaining the association relationship between the target information and the at least one second signal according to the target information and the identification information of the second signal indicated in the association relationship indication signaling.

In some embodiments, the processor is configured to read the computer program in the memory and perform the following operations:
when the association relationship between the target information and the at least one second signal is valid, determining the target second signal corresponding to the one or more target parameters and the one or more pieces of parameter information of the target second signal according to the association relationship between the target information and the at least one second signal.

It should be noted that the terminal provided in the embodiments of the present disclosure can implement all the method steps implemented in the foregoing method embodiments and achieve the same technical effects. The same parts and beneficial effects as those in the method embodiments are not described in detail herein.

An embodiment of the present disclosure further provides a computer-readable storage medium having a computer program stored thereon, wherein the computer program, when executed by a processor, implements the steps of the information transmission method applied to the terminal. The processor-readable storage medium may be any available medium or data storage device accessible by a processor, including but not limited to a magnetic memory (e.g., a floppy disk, a hard disk, a magnetic tape, a magneto-optical disk (MO), etc.), an optical memory (e.g., a Compact Disc (CD), a Digital Versatile Disc (DVD), a Blu-ray Disc (BD), a High-Definition Versatile Disc (HVD), etc.), and a semiconductor memory (e.g., a ROM, an Erasable Programmable Read-Only Memory (EPROM), an Electrically Erasable Programmable Read-Only Memory (EEPROM), a non-volatile memory (NAND Flash), a Solid State Disk (SSD), etc.).

As shown in FIG. 8, an embodiment of the present disclosure provides an information transmission apparatus 800 applied to a network device, including:
a second sending unit 801, configured to send the association relationship between the target information and the at least one second signal to the terminal;
wherein the target information includes at least one of the following: at least one first signal and at least one piece of Channel State Information (CSI) reporting configuration information.

In some embodiments, the apparatus further includes:
a second determining unit, configured to determine the one or more time-domain positions of the target second signal; and
a second receiving unit, configured to receive the target second signal at the one or more time-domain positions.

In some embodiments, the second determining unit is configured to:
determine the one or more time-domain positions of the target second signal according to the time start instant and the time slot offset of the target second signal;
wherein the time start instant includes at least one of the following:
   a transmission occasion of the first signal associated with the target second signal;
   a CSI reporting instance corresponding to the first signal associated with the target second signal;
   a reporting instance corresponding to the CSI reporting configuration information associated with the target second signal;
   a transmission occasion of the first signal corresponding to the CSI reporting configuration information associated with the target second signal; and
   a receiving occasion of the signaling that activates the association relationship.

In some embodiments, the second determining unit is configured to implement one of the following:
determining the one or more first transmission occasions as the one or more time-domain positions of the target second signal;
determining the second transmission occasion in the one or more first transmission occasions as the one or more time-domain positions of the target second signal, wherein the second transmission occasion is an available time unit in the one or more first transmission occasions that has the minimum interval from the transmission occasion of the first signal or the CSI reporting instance corresponding to the first signal; and
determining the one or more third transmission occasions as the one or more time-domain positions of the target second signal;
wherein the one or more first transmission occasions include at least one of the following:
   the next available time unit of the DCI signaling that triggers aperiodic CSI or semi-persistent CSI reporting;
   the m-th available time unit before or after the transmission occasion of the first signal associated with the target second signal (where m is an integer greater than or equal to 1);
   the n-th available time unit before or after the CSI reporting instance corresponding to the first signal associated with the target second signal (where n is an integer greater than or equal to 1);
   wherein the one or more third transmission occasions include at least one of the following:
      Y available time units before or after the transmission occasion of the first signal associated with the target second signal (where Y is an integer greater than or equal to 1);
      X available time units before or after the CSI reporting instance corresponding to the first signal associated with the target second signal (where X is an integer greater than or equal to 1).

In some embodiments, the second sending unit 801 is configured to:
send the association relationship between the target information and the at least one second signal to the terminal through the association relationship indication signaling; and
the association relationship indication signaling includes at least one of the following: radio Resource Control (RRC) signaling; Media Access Control Control Element (MAC CE); downlink Control Information (DCI).

In some embodiments, the association relationship indication signaling includes one of the following:
identification information of the second signal associated with the first signal;
identification information of the second signal associated with the CSI reporting configuration information;
the target information and identification information of the second signal.

In some embodiments, the MAC CE is configured to activate CSI reporting or activate the first signal transmission.

In some embodiments, the association relationship indication signaling is used to implicitly or explicitly indicate whether the association relationship is valid.

In some embodiments, the association relationship indication signaling includes the slot offset of the second signal.

In some embodiments, the apparatus further includes:
a third sending unit, configured to send indication information to the terminal, wherein the indication information is used to indicate whether to activate the association relationship.

It should be noted that the apparatus embodiment corresponds to the foregoing method embodiment one-to-one, and all implementations in the foregoing method embodiments are applicable to this apparatus embodiment and can achieve the same technical effects.

It should be noted that the division of units in the embodiments of the present disclosure is schematic and merely a logical function division, and there may be other division manners in actual implementation. In addition, the functional units in the embodiments of the present disclosure may be integrated into one processing unit, or each unit may exist independently physically, or two or more units may be integrated into one unit. The integrated unit may be implemented in the form of hardware or a software functional unit.

When the integrated unit is implemented in the form of a software functional unit and sold or used as an independent product, it may be stored in a processor-readable storage medium. Based on this understanding, the technical solution of the present disclosure essentially or the part contributing to the related art, or all or part of the technical solution, may be embodied in the form of a software product. The computer software product is stored in a storage medium and includes several instructions to enable a computer device (which may be a personal computer, a server, a network device, etc.) or a processor to execute all or part of the steps of the method described in the embodiments of the present disclosure. The foregoing storage medium includes various media that can store program codes, such as a USB flash drive, a removable hard disk, a Read-Only Memory (ROM), a Random Access Memory (RAM), a magnetic disk, or an optical disk.

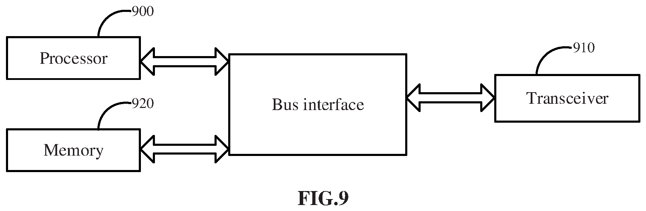

As shown in FIG. 9, an embodiment of the present disclosure further provides a network device, including a processor 900, a transceiver 910, a memory 920, and a program stored on the memory 920 and executable on the processor 900. The transceiver 910 is connected to the processor 900 and the memory 920 through a bus interface. The processor 900 is configured to read the program in the memory and perform the following processes: the processor is configured to read the computer program in the memory and perform the following operations:
sending the association relationship between the target information and the at least one second signal to the terminal through the transceiver; and
wherein the target information includes at least one of the following: at least one first signal and at least one piece of Channel State Information (CSI) reporting configuration information.

The transceiver 910 is configured to receive and transmit data under the control of the processor 900.

In FIG. 9, the bus architecture may include any number of interconnected buses and bridges. Specifically, the various circuits of one or more processors represented by the processor 900 and the memory represented by the memory 920 are linked together. The bus architecture may also link various other circuits such as peripheral devices, voltage regulators, and power management circuits, which are well known in the art and therefore will not be further described herein. The bus interface provides an interface. The transceiver 910 may be multiple components, i.e., including a transmitter and a receiver, providing a unit for communicating with various other devices on a transmission medium, wherein the transmission medium includes wireless channels, wired channels, optical cables, etc. For different user devices, the user interface 930 may also be an interface capable of externally connecting to required devices, and the connected devices include but are not limited to a keypad, a display, a speaker, a microphone, a joystick, and the like.

The processor 900 is responsible for managing the bus architecture and general processing, and the memory 920 may store data used by the processor 900 when performing operations.

In some embodiments, the processor 900 may be a CPU (Central Processing Unit), an ASIC (Application Specific Integrated Circuit), an FPGA (Field-Programmable Gate Array), or a CPLD (Complex Programmable Logic Device), and the processor may also adopt a multi-core architecture.

By invoking the computer program stored in the memory, the processor is configured to execute any one of the methods provided in the embodiments of the present disclosure according to the obtained executable instructions. The processor and the memory may also be arranged separately in physical form.

In some embodiments, the processor is configured to read the computer program in the memory and further perform the following operations:
determining the one or more time-domain positions of the target second signal; and
receiving the target second signal at the one or more time-domain positions.

In some embodiments, the processor is configured to read the computer program in the memory and perform the following operations:
determining the one or more time-domain positions of the target second signal according to the time start instant and the time slot offset of the target second signal;
wherein the time start instant includes at least one of the following:
   a transmission occasion of the first signal associated with the target second signal;
   a CSI reporting instance corresponding to the first signal associated with the target second signal;
   a reporting instance corresponding to the CSI reporting configuration information associated with the target second signal;
   a transmission occasion of the first signal corresponding to the CSI reporting configuration information associated with the target second signal; and
   a receiving occasion of the signaling that activates the association relationship.

In some embodiments, the processor is configured to read the computer program in the memory and perform one of the following operations:
determining the one or more first transmission occasions as the one or more time-domain positions of the target second signal;
determining the second transmission occasion in the one or more first transmission occasions as the one or more time-domain positions of the target second signal, wherein the second transmission occasion is an available time unit in the one or more first transmission occasions that has the minimum interval from the transmission occasion of the first signal or the CSI reporting instance corresponding to the first signal; and
determining the one or more third transmission occasions as the one or more time-domain positions of the target second signal;
wherein the one or more first transmission occasions include at least one of the following:
   the next available time unit of the DCI signaling that triggers aperiodic CSI or semi-persistent CSI reporting;
   the m-th available time unit before or after the transmission occasion of the first signal associated with the target second signal (where m is an integer greater than or equal to 1);
   the n-th available time unit before or after the CSI reporting instance corresponding to the first signal associated with the target second signal (where n is an integer greater than or equal to 1);
   wherein the one or more third transmission occasions include at least one of the following:
      Y available time units before or after the transmission occasion of the first signal associated with the target second signal (where Y is an integer greater than or equal to 1);
      X available time units before or after the CSI reporting instance corresponding to the first signal associated with the target second signal (where X is an integer greater than or equal to 1).

In some embodiments, the processor is configured to read the computer program in the memory and perform the following operations:
sending the association relationship between the target information and the at least one second signal to the terminal through the association relationship indication signaling;
wherein the association relationship indication signaling includes at least one of the following: Radio Resource Control (RRC) signaling; Media Access Control Control Element (MAC CE); downlink Control Information (DCI).

In some embodiments, the association relationship indication signaling includes one of the following:
identification information of the second signal associated with the first signal;
identification information of the second signal associated with the CSI reporting configuration information;
identification information of the target information and the second signal.

In some embodiments, the MAC CE is configured to activate CSI reporting or activate the first signal transmission.

In some embodiments, the association relationship indication signaling is used to implicitly or explicitly indicate whether the association relationship takes effect.

In some embodiments, the association relationship indication signaling includes the slot offset of the second signal.

In some embodiments, the processor is configured to read the computer program in the memory and further perform the following operations:
sending the indication information to the terminal via the transceiver, wherein the indication information is used to indicate whether to activate the association relationship.

It should be noted that the network device provided in the embodiments of the present disclosure can implement all the method steps implemented in the foregoing method embodiments and achieve the same technical effects. The same parts and beneficial effects as those in the method embodiments are not described in detail herein.

An embodiment of the present disclosure further provides a computer-readable storage medium having a computer program stored thereon, wherein the computer program, when executed by a processor, implements the steps of the information transmission method applied to the network device. The processor-readable storage medium may be any available medium or data storage device accessible by a processor, including but not limited to a magnetic memory (e.g., a floppy disk, a hard disk, a magnetic tape, a magneto-optical disk (MO), etc.), an optical memory (e.g., a CD, a DVD, a BD, an HVD, etc.), and a semiconductor memory (e.g., a ROM, an EPROM, an EEPROM, a non-volatile memory (NAND Flash), a Solid State Disk (SSD), etc.).

Those skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may take the form of a computer program product implemented on one or more computer-usable storage media (including but not limited to disk memory and optical memory) containing computer-usable program code.

The present disclosure is described with reference to flowcharts and/or block diagrams of methods, devices (systems), and computer program products according to the embodiments of the present disclosure. It should be understood that each flow and/or block in the flowcharts and/or block diagrams, and combinations of flows and/or blocks in the flowcharts and/or block diagrams, may be implemented by computer-executable instructions. These computer-executable instructions may be provided to a processor of a general-purpose computer, a special-purpose computer, an embedded processor, or other programmable data processing devices to generate a machine, such that the instructions executed by the processor of the computer or other programmable data processing devices generate an apparatus for implementing the functions specified in one or more flows in the flowcharts and/or one or more blocks in the block diagrams.

These processor-executable instructions may also be stored in a processor-readable memory that can direct a computer or other programmable data processing devices to work in a specific manner, such that the instructions stored in the processor-readable memory generate an article of manufacture including an instruction apparatus, which implements the functions specified in one or more flows in the flowcharts and/or one or more blocks in the block diagrams.

These processor-executable instructions may also be loaded onto a computer or other programmable data processing apparatus to cause a series of operational steps to be performed on the computer or other programmable apparatus to produce a computer-implemented process, such that the instructions executed on the computer or other programmable apparatus provide steps for implementing the functions specified in one or more flows in the flowcharts and/or one or more blocks in the block diagrams.

Obviously, those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. An information transmission method performed by a terminal, comprising:
determining a target second signal and one or more pieces of parameter information of the target second signal based on an association relationship between target information and at least one second signal; and
sending the target second signal to a network device based on the one or more pieces of parameter information;
wherein the target information comprises at least one of the following: at least one first signal or at least one piece of channel state information (CSI) reporting configuration information.

2. The method according to claim 1, wherein determining the one or more pieces of parameter information of the target second signal comprises at least one of the following:
determining one or more time-domain positions of the target second signal; or
determining one or more transmission parameters of a first signal associated with the target second signal as one or more transmission parameters of the target second signal.

3. The method according to claim 2, wherein the determining one or more time-domain positions of the target second signal comprises:
determining the one or more time-domain positions of the target second signal according to a time start instant and a time slot offset of the target second signal:
wherein the time start instant comprises at least one of the following:
a transmission occasion of a first signal associated with the target second signal;
a CSI reporting instance corresponding to a first signal associated with the target second signal;
a reporting instance corresponding to CSI reporting configuration information associated with the target second signal;
a transmission occasion of a first signal corresponding to CSI reporting configuration information associated with the target second signal; or
a receiving occasion of signaling that activates the association relationship.

4. The method according to claim 2, wherein the determining one or more time-domain positions of the target second signal comprises one of the following:
determining one or more first transmission occasions as one or more time-domain positions of the target second signal;
determining a second transmission occasion in the one or more first transmission occasions as one or more time-domain positions of the target second signal, wherein the second transmission occasion is an available time unit that is in the one or more first transmission occasions and that is at a minimum interval from a transmission occasion of the first signal or a CSI reporting instance; or
determining one or more third transmission occasions as one or more time-domain positions of the target second signal;
wherein the one or more first transmission occasions comprise at least one of the following:
a next available time unit for a received signaling of triggering aperiodic CSI reporting or semi-persistent CSI reporting;
a m-th available time unit before or after an obtained transmission occasion of a first signal associated with the target second signal, wherein m is an integer larger than or equal to 1; or
an n-th available time unit before or after a CSI reporting instance corresponding to a first signal associated with the target second signal;
wherein the one or more third transmission occasions comprise at least one of the following:
Y available time units before or after a transmission occasion of a first signal associated with the target second signal, wherein Y is an integer greater than or equal to 1; or
X available time units before or after a CSI reporting instance corresponding to a first signal associated with the target second signal, wherein X is an integer greater than or equal to 1.

5. The method according to claim 2, wherein the determining the one or more transmission parameters of the first signal associated with the target second signal as the one or more transmission parameters of the target second signal comprises at least one of the following:
determining a TCI state of a first signal associated with the target second signal as the TCI state of the target second signal;
determining one or more QCL parameters of a first signal associated with the target second signal as one or more QCL parameters of the target second signal;
determining one or more ports of receiving a first signal associated with the target second signal as one or more ports of sending the target second signal;
determining a frequency of receiving a first signal associated with the target second signal as a frequency of sending the target second signal; or
determining a spatial filter for receiving a first signal associated with the target second signal as a spatial filter for transmitting the target second signal.

6. The method according to claim 1, further comprising:
obtaining the association relationship according to association relationship indication signaling;
wherein the association relationship indication signaling comprises at least one of the following:
radio resource control RRC signaling;
a media access control control element MAC CE; or
downlink control information DCI.

7. The method according to claim 6, wherein the obtaining the association relationship according to the association relationship indication signaling comprises one of the following:
obtaining an association relationship between the target information and the at least one second signal according to identification information of the second signal associated with the first signal carried in the association relationship indication signaling;
obtaining an association relationship between the target information and the at least one second signal according to identification information of the second signal associated with the CSI reporting configuration information carried in the association relationship indication signaling; or
obtaining an association relationship between the target information and the at least one second signal according to the target information and identification information of the second signal indicated in the association relationship indication signaling.

8. The method according to claim 6, wherein the MAC CE is used for activating CSI reporting or activating transmission of the first signal.

9. The method according to claim 6, wherein the association relationship indication signaling is used to implicitly or explicitly indicate whether the association relationship is valid.

10. The method according to claim 6, wherein the association relationship indication signaling comprises one or more slot offsets of the second signal.

11. The method according to claim 7, further comprising:
receiving indication information from a network device, wherein the indication information is used to indicate whether to activate the association relationship.

12. The method according to claim 11, wherein the obtaining the association relationship between the target information and the at least one second signal according to the target information and the identification information of the second signal indicated in the association relationship indication signaling comprises:
if the indication information indicates to activate the association relationship, obtaining the association relationship between the target information and the at least one second signal according to the target information and the identification information of the second signal indicated in the association relationship indication signaling.

13. The method according to claim 1, wherein determining the target second signal corresponding to one or more target parameters and the one or more pieces of parameter information of the target second signal based on the association relationship between the target information and the at least one second signal comprises:
when the association relationship between the target information and the at least one second signal is valid, determining the target second signal corresponding to the one or more target parameters and the one or more pieces of parameter information of the target second signal based on the association relationship between the target information and the at least one second signal.

14. An information transmission method performed by a network device, comprising:
sending an association relationship between target information and at least one second signal to a terminal;
wherein the target information comprises at least one of the following:
at least one first signal or at least one piece of channel state information (CSI) reporting configuration information.

15. The method according to claim 14, further comprising:
determining one or more time-domain positions of a target second signal; and
receiving the target second signal at the one or more time-domain positions.

16. The method according to claim 15, wherein the determining the one or more time-domain positions of the target second signal comprises:
determining the one or more time-domain positions of the target second signal according to a time start instant and a time slot offset of the target second signal:
wherein the time start instant comprises at least one of the following:
a transmission occasion of a first signal associated with the target second signal;
a CSI reporting instance corresponding to a first signal associated with the target second signal;
a reporting instance corresponding to CSI reporting configuration information associated with the target second signal;
a transmission occasion of a first signal corresponding to CSI reporting configuration information associated with the target second signal; or
a receiving occasion of signaling that activates the association relationship.

17. The method according to claim 15, wherein the determining the one or more time-domain positions of the target second signal comprises one of the following:
determining one or more first transmission occasions as one or more time-domain positions of the target second signal;
determining a second transmission occasion in one or more first transmission occasions as one or more time-domain positions of the target second signal, wherein the second transmission occasion is an available time unit that is in the one or more first transmission occasions and that is at a minimum interval from a transmission occasion of a first signal or a CSI reporting instance; or
determining one or more third transmission occasions as one or more time-domain positions of the target second signal;
wherein the one or more first transmission occasions comprise at least one of the following:
a next available time unit for a DCI signaling of triggering aperiodic CSI reporting or semi-persistent CSI reporting;
a m-th available time unit before or after a transmission occasion of a first signal associated with the target second signal, wherein m is an integer larger than or equal to 1; or
an n-th available time unit before or after a CSI reporting instance corresponding to a first signal associated with the target second signal;
wherein the one or more third transmission occasions comprise at least one of the following:
Y available time units before or after a transmission occasion of a first signal associated with the target second signal, wherein Y is an integer greater than or equal to 1; or
X available time units before or after a CSI reporting instance corresponding to a first signal associated with the target second signal, wherein X is an integer greater than or equal to 1.

18. The method according to claim 14, wherein the sending the association relationship between the target information and the at least one second signal to the terminal comprises:
sending the association relationship between the target information and the at least one second signal to the terminal through association relationship indication signaling;
wherein the association relationship indication signaling comprises at least one of the following:
radio resource control RRC signaling;
a media access control control element MAC CE; or
downlink control information DCI.

19. The method according to claim 18, wherein the association relationship indication signaling comprises one of the following:
identification information of a second signal associated with a first signal;
identification information of a second signal associated with CSI reporting configuration information; or
identification information of the target information and the second signal.

20. A terminal, comprising a memory, a transceiver, and a processor;
wherein the memory is configured to store a computer program; the transceiver is configured to send and receive data under the control of the processor; and the processor is configured to read the computer program in the memory and perform the following operations:
determining a target second signal and one or more pieces of parameter information of the target second signal based on an association relationship between target information and at least one second signal;
sending, through the transceiver, the target second signal to a network device based on the one or more pieces of parameter information;
wherein the target information comprises at least one of the following: at least one first signal or at least one piece of channel state information (CSI) reporting configuration information.

21. The terminal according to claim 20, wherein the processor is configured to read a computer program in the memory and perform at least one of the following operations:
determining one or more time-domain positions of the target second signal; or
determining one or more transmission parameters of a first signal associated with the target second signal as one or more transmission parameters of the target second signal.

22. The terminal according to claim 21, wherein the processor is configured to read the computer program in the memory and perform the following operations:
determining the one or more time-domain positions of the target second signal according to a time start instant and a time slot offset of the target second signal:
wherein the time start instant comprises at least one of the following:
a transmission occasion of a first signal associated with the target second signal;
a CSI reporting instance corresponding to a first signal associated with the target second signal;
a reporting instance corresponding to CSI reporting configuration information associated with the target second signal;
a transmission occasion of a first signal corresponding to CSI reporting configuration information associated with the target second signal; or
a receiving occasion of signaling that activates the association relationship.

23. The terminal according to claim 21, wherein the processor is configured to read a computer program in the memory and perform one of the following operations:
determining one or more first transmission occasions as one or more time-domain positions of the target second signal;
determining a second transmission occasion in one or more first transmission occasions as one or more time-domain positions of the target second signal, wherein the second transmission occasion is an available time unit that is in the one or more first transmission occasions and that is at a minimum interval from a transmission occasion of a first signal or a CSI reporting instance; or
determining one or more third transmission occasions as one or more time-domain positions of the target second signal;
wherein the one or more first transmission occasions comprise at least one of the following:
a next available time unit for a received signaling of triggering aperiodic CSI reporting or semi-persistent CSI reporting;
a m-th available time unit before or after an obtained transmission occasion of a first signal associated with the target second signal, wherein m is an integer larger than or equal to 1; or
an n-th available time unit before or after a CSI reporting instance corresponding to a first signal associated with the target second signal;
wherein the one or more third transmission occasions comprise at least one of the following:
Y available time units before or after a transmission occasion of a first signal associated with the target second signal, wherein Y is an integer greater than or equal to 1; or
X available time units before or after a CSI reporting instance corresponding to a first signal associated with the target second signal, wherein X is an integer greater than or equal to 1.

24. The terminal according to claim 21, wherein the processor is configured to read a computer program in the memory and perform at least one of the following operations:
determining a TCI state of a first signal associated with the target second signal as a TCI state of the target second signal;
determining one or more QCL parameters of a first signal associated with the target second signal as one or more QCL parameters of the target second signal;
determining one or more ports of receiving a first signal associated with the target second signal as one or more ports for sending the target second signal;
determining a frequency of receiving a first signal associated with the target second signal as a frequency of sending the target second signal; or
determining a spatial filter for receiving a first signal associated with the target second signal as a spatial filter for transmitting the target second signal.

25. The terminal according to claim 20, wherein the processor is configured to read the computer program in the memory to further perform the following operations:
obtaining the association relationship according to association relationship indication signaling;
wherein the association relationship indication signaling comprises at least one of the following:
radio resource control RRC signaling;
a media access control control element MAC CE; or
downlink control information DCI.

26. The terminal according to claim 25, wherein the processor is configured to read a computer program in the memory and perform one of the following operations:
obtaining an association relationship between the target information and the at least one second signal according to identification information of the second signal associated with a first signal carried in the association relationship indication signaling;
obtaining an association relationship between the target information and the at least one second signal according to identification information of the second signal associated with the CSI reporting configuration information carried in the association relationship indication signaling; or
obtaining an association relationship between the target information and the at least one second signal according to the target information and identification information of the second signal indicated in the association relationship indication signaling.

27. A network device, comprising a memory, a transceiver, and a processor,
wherein the memory is configured to store a computer program; the transceiver is configured to send and receive data under the control of the processor; and the processor is configured to read the computer program in the memory and perform the following operations:
sending, through the transceiver, an association relationship between target information and at least one second signal to a terminal;
wherein the target information comprises at least one of the following:
at least one first signal or at least one piece of channel state information (CSI) reporting configuration information.

28. The network device according to claim 27, wherein the processor is configured to read the computer program in the memory further performs the following operations:
determining one or more time-domain positions of a target second signal; and
receiving the target second signal at the one or more time-domain positions.

29. The network device according to claim 28, wherein the processor is configured to read the computer program in the memory and perform the following operations:
determining the one or more time-domain positions of the target second signal according to a time start instant and a time slot offset of the target second signal:
wherein the time start instant comprises at least one of the following:
a transmission occasion of a first signal associated with the target second signal;
a CSI reporting instance corresponding to a first signal associated with the target second signal;
a reporting instance corresponding to CSI reporting configuration information associated with the target second signal;
a transmission occasion of a first signal corresponding to CSI reporting configuration information associated with the target second signal; or
a receiving occasion of signaling that activates the association relationship.

30. The network device according to claim 28, wherein the processor is configured to read a computer program in the memory and perform one of the following operations:
determining one or more first transmission occasions as one or more time-domain positions of the target second signal;
determining a second transmission occasion in one or more first transmission occasions as one or more time-domain positions of the target second signal, wherein the second transmission occasion is an available time unit that is in the one or more first transmission occasions and that is at a minimum interval from a transmission occasion of the first signal or a CSI reporting instance;
determining one or more third transmission occasions as one or more time-domain positions of the target second signal;
wherein the one or more first transmission occasions comprises at least one of the following:
a next available time unit for a DCI signaling of triggering aperiodic CSI reporting or semi-persistent CSI reporting;
a m-th available time unit before or after a transmission occasion of a first signal associated with the target second signal, wherein m is an integer larger than or equal to 1; or
an n-th available time unit before or after a CSI reporting instance corresponding to a first signal associated with the target second signal;
wherein the one or more third transmission occasions comprise at least one of the following:
Y available time units before or after a transmission occasion of a first signal associated with the target second signal, wherein Y is an integer greater than or equal to 1; or
X available time units before or after a CSI reporting instance corresponding to a first signal associated with the target second signal, wherein X is an integer greater than or equal to 1.

31. An information transmission apparatus, applied to a terminal, comprising:
a first determining unit, configured to determine a target second signal and one or more pieces of parameter information of the target second signal based on an association relationship between target information and at least one second signal;
a first sending unit, configured to send the target second signal to a network device based on the one or more pieces of parameter information;
wherein the target information comprises at least one of the following: at least one first signal or at least one channel state information (CSI) reporting configuration information.

32. An information transmission apparatus, applied to a network device, comprising:
a second sending unit, configured to send an association relationship between target information and at least one second signal to the terminal;
wherein the target information comprises at least one of the following:
at least one first signal or at least one piece of channel state information (CSI) reporting configuration information.

33. A processor-readable storage medium, wherein the processor-readable storage medium stores a computer program, and the computer program is configured to cause a processor to execute the method according to any one of claims 1 to 19.
